# EUROPEAN PATENT APPLICATION

(11) **EP 2 869 097 A1**
(43) Date of publication of application: **06.05.2015**
(21) Application number: 13191315.4
(22) Date of filing: 01.11.2013
(51) Int. Cl.: G02B 3/14, G02B 26/08, G02B 26/06

(54) **Tunable optical device**

(71) Applicant: Optotune AG, 8953 Dietikon (CH)
(72) Inventor: Niederer, David, 5024 Küttingen (CH); Romer, Christoph, 8050 Zürich (CH); Aschwanden, Manuel, 6319 Allenwinden (CH); Patscheider, Roman, 8400 Winterthur (CH)
(74) Representative: Schulz, Ben Jesko

(57) **Abstract**

The present invention relates to a tunable optical device (1), comprising: a first optical element (10) having a first surface (10b), a second optical element (30) having a first surface (30a), wherein the two first surfaces (10b, 30a) face each other, and an elastically deformable body (20) arranged between the two optical elements (10, 30), wherein said body (20) comprises a first surface (20a) and a second surface (20b) facing away from the first surface (20a) of said body (20), wherein the first surface (20a) of said body (20) is attached to the first surface (10b) of the first optical element (10), and wherein the second surface (20b) of said body (20) is attached to the first surface (30a) of the second optical element (30), wherein the optical device (1) comprises a reluctance actuator means (40) that is designed to move the first optical element (10) so as to elastically deform said body (20), wherein said reluctance actuator means (40) comprises a first electrically conducting coil (400), a first magnetic flux return structure (600) being arranged adjacent to said coil (400), and a magnetic flux guiding structure (500) attached to the first optical element (10), wherein said magnetic flux guiding structure (500) is particularly separated from said first magnetic flux return structure (600) by a first gap (G), and wherein the optical device (1) is designed to apply a current to said first coil (400) such that magnetic flux generated by the first coil (400) is guided by the first magnetic flux return structure and the magnetic flux guiding structure (500) particularly via said first gap (G) and the resulting reluctance force moves the magnetic flux guiding structure (500) and therewith the first optical element (10) towards the first magnetic flux return structure (600) thereby particularly reducing said first gap (G).

## Description

The invention relates to an optical device, particularly a tunable lens, prism and/or mirror.

Tunable optical devices such as tunable lenses are known from the state of the art.

For instance US2010/0232161, US2013/0176628 and WO2005/096028 describe fluidic lenses, respectively, where a curvature of a membrane is adjusted by influencing a volume filled with a fluid that is in parts delimited by the membrane. Due to the volume being constant, acting on the membrane results in an increased curvature of the latter, while releasing pressure on the membrane results in a decreasing curvature of the latter.

However, since the lens deformation is controlled by changing the fluidic pressure such systems are quite sensitive to temperature changes and also need more effort due to the fact that the containment of the employed fluid has to be maintained intact.

Based on the above, the problem underlying the present invention is to provide for a tunable optical device, particularly a tunable lens that is more robust and more forgiving with respect to temperature changes.

This problem is solved by a lens device having the features of claim 1.

Preferred embodiments of the optical device are stated in the corresponding sub claims and are described below.

According to claim 1, the optical device according to the invention comprises: a first optical element having a first surface, a second optical element having a first surface, wherein the two first surfaces face each other, and an elastically deformable body arranged between the two optical elements, wherein said body comprises a first surface and a second surface facing away from the first surface of said body, wherein the first surface of said body is attached to the first surface of the first optical element, and wherein the second surface of said body is attached to the first surface of the second optical element, wherein the optical device comprises a reluctance actuator means that is designed to move the first optical element so as to elastically deform said body, wherein said reluctance actuator means comprises at least a first electrically conducting coil, a first magnetic flux return structure being arranged adjacent to said at least one first coil, and a magnetic flux guiding structure attached to the first optical element, wherein said magnetic flux guiding structure is particularly separated from said first magnetic flux return structure by a first gap, and wherein the optical device is designed to apply a current to said at least one first coil such that magnetic flux generated by the at least one first coil is guided by the first magnetic flux return structure and the magnetic flux guiding structure particularly via said first gap such that a reluctance force is generated which moves the magnetic flux guiding structure and therewith the first optical element with respect to (e.g. towards) the first magnetic flux return structure thereby particularly reducing said first gap.

In other words, the current invention particularly describes a new approach to provide for e.g. a tunable lens by using a reluctance actuator means in combination with a non-fluidic deformable body (e.g. lens or mirror body) and e.g. a harder but flexible first optical element, e.g. in the form of a first membrane (e.g. glass). The absence of a fluid makes the system less vulnerable to failure and achieves lower cost in production. Furthermore, since the deformation of the body/lens is not controlled by changing a fluidic pressure, the system is much less sensitive to temperature change. In particular, if said body expands due to increased temperature, the first membrane (no electrical power) can remain in its initial state (shape). This is not the case in pressure controlled fluidic lenses.

Preferably, said body forms a monolithic body or block. Further, preferably, said body consists out of a rigid, non-fluidic material or mixture of materials. Furthermore, said body can be in direct contact with a surrounding gas (e.g. air).

Further, preferably, said body comprises a circumferential surface connecting the first and the second surface of the body. Said circumferential surface preferably faces the first magnetic flux return structure which is preferably arranged radially further out than said body.

In an embodiment of the present invention, the first magnetic flux return structure comprises an annular shape and particularly surrounds said body.

Further, the second optical element is preferably attached to the first magnetic flux return structure on a side facing away from the first optical element.

Preferably, the first coil is embedded in the first magnetic flux return structure and preferably surrounds said body of the optical device. Preferably, the first coil comprises a conductor that is wound around said axial direction (e.g. optical axis of the optical device). For producing the first coil (or particularly also other coils described herein), a conductor can be wound on a pin and glued resulting in a solid first coil that can be removed from the pin and inserted into the first return structure. However, the conductor may also be wound on a bobbin, and may then be inserted into the first return structure together with the bobbin. Preferably, the first coil is electrically insulated with respect to the surrounding first return structure.

Preferably, the first magnetic flux return structure comprises a circumferential first wall extending adjacent to the first coil, namely between said body and said first coil, wherein said first wall of the first magnetic flux return structure is connected to a second wall of the first magnetic flux return structure via a bottom of the first magnetic flux return structure, wherein said second wall preferably surrounds said first coil so that the first coil is arranged between the first and the second wall. Preferably, said bottom extends adjacent to the first coil on a side of the first coil facing away from the first optical element (but e.g. facing the second optical element). Thus, particularly, the first magnetic flux return structure encloses the first coil in U-shaped manner.

Preferably, said reluctance actuator is designed to move said magnetic flux guiding structure in an axial direction with respect to the first magnetic flux return structure so as to deform (e.g. compress) said body along said axial direction and thereby adjust (e.g. increase) a curvature of said first optical element and particularly also a curvature of said second optical element. Preferably, said axial direction is aligned with an optical axis of the optical device or oriented perpendicular to a plane spanned by an outer circumferential edge of the second optical element.

Due to such an e.g. compression of the deformable body in the axial direction, the curvature of the first optical element attached to the body increases. When the current is switched off, the magnetic flux guiding structure returns into its initial position (e.g. zero current) and the curvature decreases. In the initial state (e.g. zero current) the curvature of the first optical element may be pre-defined by pre-shaping said body correspondingly and/or by pre-tensioning the first optical element (e.g. the first optical element may be attached to the magnetic flux guiding structure in a pretensioned state).

Here, increasing curvature means that the first optical element may develop a more pronounced convex bulge, or that the first optical element changes from a concave or a flat state to a convex one. Likewise, a decreasing curvature means that the first optical element changes from a pronounced convex state to a less pronounced convex state or even to a flat or concave state, or changes from a flat or concave state to an even more pronounced concave state. The same may also apply to the second optical element whose curvature can also be adjusted by means of deforming (e.g. compressing) said body in the axial direction. In this way, the focal length of the optical device can be tuned by means of the reluctance actuator means thus forming a tunable lens.

Since the first optical element is attached via an outer edge region to the magnetic flux guiding structure the latter particularly also functions as a so called lens shaper since in case said first optical element is an elastically deformable membrane a boundary region of said membrane is fixed to said structure, which therefore defines the curvature of the membrane when the latter gets deformed. In case the magnetic flux guiding structure comprises a circular (annular) shape, a spherical lens results. Any other lens shaper contours are also possible.

The possible optical characteristics of the first and second optical element and of said body are described below in more detail.

Particularly, the term optical refers to the fact that said optical elements either let light pass, deflect it, reflect it, and/or absorb it.

Particularly, the first and/or the second optical element can be formed as flat and (e.g. transparent) elastically deformable membranes that can be (elastically) deformed by means of the reluctance actuator means. Such a first and/or second optical element can be made out of or comprise a glass, a polymer, an elastomer or a plastic, or any other e.g. transparent and stretchable or flexible material. For example, such a membrane may be made out of a silicone-based polymer such as poly(dimethylsiloxane) also known as PDMS or a polyester material such as PET or a biaxially-oriented polyethylene terephtalate (e.g. "Mylar"). Further, the membrane can comprise a coating (e.g. anti-reflection, filter or mirror). Further, the membrane can also be structured, e.g. can comprise a structured surface including particularly a micro structured element with refractive, diffractive and/or reflective structures. Such a first configuration, i.e., both optical elements being formed as such membranes, is particularly used for optical devices according to the invention in the form of (e.g. symmetrically or non-symmetrically) tunable lenses.

Generally, it is also possible that the first optical element forms such a membrane, while the second optical element forms an (e.g. transparent) rigid optical element (e.g. window), i.e. an optical element that is significantly more rigid than such a membrane. As an example, the rigid optical element may be at least 50 times stiffer than such a membrane. The rigid optical element can comprise or can be formed out of a glass, a plastic, a polymer, or a metal or any other suitable (e.g. transparent) material. It can comprise or can be formed as an (e.g. glass) particularly flat window, a lens, a mirror, a micro structured element with refractive, diffractive and/or reflective structures. Such a second configuration, where the first optical element is a membrane and the second optical element is such a rigid optical element may also be used for (e.g. symmetrically or non-symmetrically) tunable lenses and/or mirrors.

Furthermore, it is also possible, that the first optical element (e.g. in the above configurations) is itself formed as a lens (e.g. a double convex lens out of a glass).

Further, both the first and the second optical element may generally comprise a coating (e.g. anti-reflection).

Further, in a third configuration, it is also possible that both optical elements are such rigid optical elements (e.g. as described above). Such a configuration may particularly be used for optical devices in the form of tunable prisms or mirrors for deflecting/reflecting light beams.

Further, generally, said body (e.g. polymer block) can comprise some 3D-shape, which is preferably formed cylinder symmetrically with respect to said axial direction (e.g. optical axis of the optical device). Preferably, said body comprises an (e.g. circular) cylindrical shape with said first surface of said body forming the top of the cylinder and said second surface of said body forming the bottom of the cylinder. Further, said body can be tapered towards the second optical element. E.g., said body may comprise a conical shape or may comprise a cross sectional contour in the form of a trapezoid. Thereby, the curvature of the first optical element (e.g. first membrane) is more spherical upon deformation. The body (e.g. polymer block) can be particularly pre-shaped in a way that supports a certain desired deformation of said body when a force is applied. The body is preferably designed such that it can be deformed in the desired way (e.g. so as to change the curvature and therewith the focal length of the optical device) by the force of the reluctance actuator means that is transferred through the first optical element attached to the first surface of the body.

Furthermore, particularly in the case of an optical device in the form of a tunable lens, said body can be (e.g. completely or at least partially) transparent. Preferably, the body consists of or comprises a polymer (e.g. PDMS), a gel, or a plastic. Further, the body may also be formed out of or comprise a mirror-like material (e.g. when employed in tunable mirrors consisting of silver nanoparticle filled PDMS etc.).

According to an embodiment of the present invention, the magnetic flux guiding structure comprises a first surface facing the first magnetic flux return structure and said first coil, and a second surface facing away from the first magnetic flux return structure (and said first coil). Preferably, the first optical element is attached with a second surface that faces away from the first surface of the first optical element to the first surface of the magnetic flux guiding structure. Alternatively, the first optical element is attached with its first surface to the second surface of the magnetic flux guiding structure. The first optical element may also be attached to an inner edge of the magnetic flux guiding structure.

Preferably, the magnetic flux return structure and/or the magnetic flux guiding structure are formed out of or comprise a magnetically soft material such as iron, a magnetically soft ferrite or another suitable material. Said structures are designed to guide and bundle the magnetic flux.

According to an embodiment of the present invention, the magnetic flux guiding structure comprises or is formed as an e.g. annular plate member having an aperture (e.g. for the passage of light through the latter, which light then may pass eventually the first optical element, said body as well as the second optical element (e.g. in case of an optical device in the form of a tunable lens or prism)).

According to an embodiment of the present invention, the magnetic flux guiding structure comprises a circumferential (e.g. annular) protrusion that protrudes either from an outer edge region, or, alternatively, from an inner edge region of said plate member, wherein particularly said protrusion extends laterally with respect to the first magnetic flux return structure.

In an embodiment of the present invention, when said protrusion protrudes from an inner edge region of said plate member, which inner edge region delimits said aperture of the plate member, said protrusion extends between said body of the optical device and the first wall of the first magnetic flux return structure, wherein particularly the protrusion is designed to slide along the first wall when the magnetic flux guiding structure is moved in said axial direction. Thus, the two structures form a linear guiding means for guiding the movement of the magnetic flux guiding structure along the axial direction.

A further advantage of this embodiment is the fact, that the metal return structure may form a wall of a housing of the optical device and thus allows for an effective cooling of the optical device. Further, relative movement of the magnetic flux guiding structure with respect to said return structure increases and decreases said first gap thus sucking air into the first gap and blowing air out of the first gap, which provides for a ventilation further cooling the optical device.

According to a further embodiment of present invention, the optical device comprises an air exchange hole connecting an interior space of the optical device to the ambient atmosphere, wherein said body is arranged in said interior space. Particularly, said air exchange hole may be in fluid connection with said first gap. Thus, when the body is deformed, air can flow into or out of said interior space so that there is in particular no need to generate reluctance actuator forces that also need to compress air present in said interior space.

In another embodiment, when said protrusion extends from an outer edge region of said plate member, said protrusion surrounds the second wall of the first magnetic flux return structure, wherein now the protrusion is preferably designed to slide along the second wall when the magnetic flux guiding structure is moved in said axial direction. Thus, again, the two structures form a linear guiding means for guiding the movement of the magnetic flux guiding structure along the axial direction.

Alternatively, e.g. in case no such protrusion is present, an embodiment of the invention provides for a linear guiding means for guiding said movement of the magnetic flux guiding structure along said axial direction, in the form of at least one pin connected to the first optical element or to the magnetic flux guiding structure, which at least one pin is designed to slide in an associated recess of the optical device, which recess is particularly formed in a housing part of the optical device, which housing part may be connected to the first the magnetic flux return structure.

Further, generally, for absorbing light scatter, the optical device may comprise light absorbing means which may be formed as a coating or as separate parts. For instance such a light absorbing means may be provided on a surface of the magnetic flux guiding structure, which surface faces and eventually surrounds said body, e.g. on a surface of the first wall that faces said body, or on a surface of the magnetic flux return structure that faces and eventually surrounds said body. Further such light absorbing means may be provided on the first and/or second optical element, for instance so as to delimit an aperture of said elements. Furthermore, a surrounding housing can also be used to define a clear aperture of the optical device or lens.

According to an embodiment of the present invention, said elastically deformable body is designed to provide a restoring force when deformed by the reluctance actuator means such that said restoring force helps moving the magnetic flux guiding structure and thus the first optical element (and said body) back into an initial position when said current is switched off. Furthermore, the body may also be designed to provide a restoring force that prevents the magnetic flux guiding structure from becoming attached to the first magnetic flux return structure (so called pull-in effect). For this, the body is preferably designed to provide for a restoring force that increases faster than the reluctance force with decreasing first gap between said magnetic flux guiding/return structures. Thus, the body may help to prevent such a pull-in effect. For these purposes, an embodiment of the present invention comprises at least one additional spring member (or two additional spring members, see below) that is designed to be elastically deformed when the magnetic flux guiding structure is moved with respect to (e.g. towards) the first magnetic flux return structure by the reluctance actuator means, so that said spring member provides a restoring force that helps moving the magnetic flux guiding structure back into an initial position when said current is switched off. Furthermore, the spring member is preferably designed to provide a restoring force that increases faster than the reluctance force with decreasing first gap between said magnetic flux guiding/return structures, so that the spring member is particularly also designed to prevent said pull-in effect when a constant current is applied to the first coil. Further, the at least one spring member (or two such spring members) may also be designed to prevent a lateral movement of the magnetic flux guiding structure perpendicular to the axial direction so as to prevent a lateral pull-in, where the magnetic flux guiding structure snaps to a lateral (e.g. top or center) magnetic flux return structure and then sticks to it.

For instance, such a spring member may be a circumferential (e.g. annular) spring member (e.g. an O-ring) that is arranged between a face side of said protrusion of the magnetic flux guiding structure (see e.g. above) and the second optical element.

Further, for instance, said spring member may be formed as a cylindrical spring member that surrounds the magnet flux return structure (and may be connected to it) and extends adjacent to the second wall of the magnetic flux return structure, wherein the plate member preferably rests on a face side of said spring member. In this setup the generated overall force characteristics is advantageously nearly linear with respect to the applied current.

Further, the afore-mentioned annular spring members may also be designed as sealing members that may seal a certain region or volume of the optical device.

According to an embodiment of the present invention, the magnetic flux guiding structure is coupled to the first magnetic flux return structure via an annular spring member (see e.g. above), wherein the optical device preferably comprises a magnet (e.g. an annular magnet instead of a first wall of the return structure) adjacent said first coil, which magnet is designed to exert a force onto the magnetic flux guiding structure, so as to pre-tension said spring member. Thus, in case a current is applied to the first coil such that the magnetic flux generated by the first coil is opposite to the direction of the magnetic flux generated by said magnet, the magnetic flux through said first gap is reduced, so that the magnetic flux guiding structure is pushed away from the first return structure by the spring member restoring force and said first gap is increased, while in case the current flows in the opposite direction, said first gap decreases, since the magnetic flux and therefore the reluctance force are increased.

According to an embodiment of the present invention the optical device comprises a housing part surrounding the first magnetic flux return structure, wherein the magnetic flux guiding structure is connected to the housing part via a spring member, particularly said spring member is an annular spring member. Particularly, said spring member is formed out of a metal.

According to an embodiment of the present invention said reluctance actuator means comprises a second electrically conducting coil, a second magnetic flux return structure being arranged adjacent to said second coil, wherein said magnetic flux guiding structure is preferably separated from said second magnetic flux return structure by a second gap, and wherein the optical device is designed to apply a current to said second coil such that magnetic flux generated by the second coil is guided by the second magnetic flux return structure and the magnetic flux guiding structure preferably via said second gap such that a reluctance force is generated that moves the magnetic flux guiding structure and therewith the first optical element with respect to (e.g. towards) the second magnetic flux return structure thereby particularly reducing said second gap.

Preferably, said second magnetic flux return structure faces said first magnetic flux return structure. Further, particularly, said magnetic flux guiding structure is arranged between the first and the second magnetic flux return structure.

Preferably, the two opposed return structures can be connected to each other via a circumferential housing or housing part that surrounds said return structures, wherein particularly said housing or housing part may also be designed to guide the movement of the magnetic flux guiding structure along the axial direction.

The second magnetic flux return structure may be designed as stated above. Regarding the spatial orientation of the two return structures, the bottoms of the latter preferably face away from each other while the respective first and second coil face each other. Likewise, the second coil preferably comprises a conductor that is wound about the axial direction (or optical axis) along which the return structures face each other.

The benefit of having two coils and corresponding return structures lies within the fact that now a movement of the magnetic flux guiding structure can be initiated both in and counter to said axial direction. In order to control such a movement, the optical device preferably comprises a position sensor which may be arranged on said housing part so that the position sensor faces an outer edge region of the magnetic flux guiding structure. This position sensor can be a capacitive sensor, a Hall sensor or a strain sensor or any other type of position sensor, and it preferably senses the movement of the magnetic flux guiding structure with respect to the housing.

Further, generally, a temperature sensor may be arranged in, on or near said body of the optical device for measuring or estimating the temperature of the body. The temperature sensor preferably cooperates with a control unit that controls said axial movement of the magnetic flux guiding structure depending on the measured actual temperature, particularly by controlling current(s) applied to said first and/or second coil(s), so as to compensate for a temperature-induced volume change (e.g, expansion) of the body. E.g. the control unit is preferably designed to control the axial movement of the magnetic flux guiding structure such that an actual position of the magnetic flux guiding structure approaches a reference value of the position associated to the current temperature detected by said temperature sensor. The reference values of the position of the magnetic flux guiding structure for a plurality of different temperatures may be stored in a look-up table. The temperature sensor can be a separate device or may also use the coil itself, by measuring the resistance of the coil which is temperature dependent/sensitive.

According to another aspect/embodiment of the present invention, said reluctance actuator means is designed not only to generate the above-described axial movement of the magnetic flux guiding structure or plate member, but also - as an alternative or an additional feature - to tilt the magnetic flux guiding structure and therewith the first optical element with respect to the magnetic flux return structure, particularly so as to form said body into a prism for deflecting light passing through the body or even for reflecting light (e.g. tunable mirror), wherein particularly the reluctance actuator means is designed to move the first optical element axially and to tilt it at the same time or independently from each other.

In order to be able to provide said tilting movement (as well as eventually an axial movement) the reluctance actuator means comprises according to an embodiment of the present invention a plurality of electrically conducting first coils arranged adjacent said first magnetic flux return structure, particularly, two, three, four or even twelve coils. Preferably, said first coils are arranged along a periphery of said body of the optical device such that they face the first magnetic flux guiding structure, respectively, wherein particularly each first coil is equally spaced from its neighboring first coils along said periphery. Such an arrangement of the first coils allows a non-rotationally-symmetrical deformation of the body, resulting in a lens that allows for higher order lens aberration correction.

It is to be noted in this regard that the first magnetic flux return structure may also be formed as a disconnected structure, i.e., may consist of several separate sub-structures that may each be associated to a different first coil or a different group of first coils. The same may apply for the second coils and the second return structure introduced below.

In each case, the first magnetic flux return structure (or the respective sub structure) comprises a first wall region and a second wall region connected via a bottom region as described above, wherein the individual first coil is arranged between the first and the second wall region and adjacent said bottom region, wherein additionally a third wall region is provided which protrudes from the bottom region into the interior of the respective first coil. Of course, the first coils may be embedded into a single connected first magnetic flux return structure.

According to an embodiment of the present invention the reluctance actuator means comprises a plurality of electrically conducting second coils arranged adjacent said second magnetic flux return structure, which second coils are arranged such that they face the magnetic flux guiding structure, respectively, wherein particularly each second coil is equally spaced from its neighboring second coils along said magnetic flux guiding structure, and wherein particularly each second coil faces an associated first coil. Also here, the second coils are arranged with respect to a single second magnetic flux return structure or a corresponding number of individual sub structures as described above with respect to the first coils. The bottom regions of the opposed first and second magnetic flux return (sub) structures preferably face away from each other so that the first coils face their respective counter part of the second coils (cf. above).

Preferably, when a first and a second magnetic flux return structure are present, the magnetic flux guiding structure (e.g. plate member) is coupled to the first return structure via an e.g. annular first spring member and to the second return structure via an e.g. annular second spring member. Here, the first spring member is elastically compressed when the magnetic flux guiding structure is moved towards the first return structure, while the second spring member is elastically compressed when the magnetic flux guiding structure is moved towards the second return structure. In case the magnetic flux guiding structure is tilted, both spring members may be locally compressed. Preferably, said spring members provide - when compressed - a restoring force as described above (i.e. for returning the magnetic flux guiding structure into an initial position and for preventing said pull-in effect).

Furthermore, said spring members are preferably also designed to prevent a lateral movement of the magnetic flux guiding structure, in particular a lateral pull-in of the moving magnetic flux guiding structure or plate member to the non-moving magnetic flux return structure such as the first, second, top and/or center magnetic flux return structure.

Preferably, these spring members described herein are formed out of a silicone or comprise a silicone.

According to an embodiment of the present invention said plate member is designed to be (e.g. elastically) deformable, wherein particularly for deforming said plate member the latter comprises a plurality of first recesses, wherein each first recess extends in a radial direction of the (e.g. circular) plate member. Further - as alternative or in addition - the plate member may comprise a plurality of second recesses, wherein each second recess extends in a radial direction of the plate member, wherein particularly each first recess starts at an outer edge of the plate member and ends spaced apart from an inner edge of the plate member, and wherein particularly each second recess starts at an inner edge of the plate member and ends spaced apart from an outer edge of the plate member. Particularly, the first and/or second recesses divide the plate member into a plurality of equally sized sectors.

According to an embodiment of the present invention the first coils are arranged such that they each face an associated second recess and/or are arranged along the plate between two neighboring first recesses.

According to a further embodiment of the present invention, the first optical element (particularly when formed as a first membrane, see above) is connected to the magnetic flux guiding structure via a flexible layer, which is particularly configured to protect the first optical element from the magnetic flux guiding structure and/or to influence the shape of the first optical element, particularly in a region adjacent to the magnetic flux guiding structure. For instance, a curvature of the first optical element adjacent to an inner edge of the magnetic flux guiding structure may be delimited with help of the flexible layer. Hence, the flexible layer may help in providing a smooth transition of the first optical element (e.g. first membrane) into a deformed state.

Particularly, the flexible layer may have a first side connected to the magnetic flux guiding structure (e.g. plate member) and a second side connected to the first optical element. Preferably, the magnetic flux guiding structure (e.g. annular plate member) comprises a recess at an inner edge of the magnetic flux guiding structure that is filled by said flexible layer, which therefore particularly comprises a broadened edge region that protrudes out of said recess beyond said inner edge of the magnetic flux guiding structure. The first optical element is therefore prevented from contacting a possibly sharp edge of the magnetic flux guiding structure. Further, when the curvature of the first optical element is adjusted by the reluctance actuator, the first optical element is bent around said broadened edge region of the flexible layer which thus particularly helps giving the first optical element a soft curvature in the region of said broadened edge region.

Generally, the optical device described herein can be used for autofocus, zoom and/or light deflection in any optical system. Such an optical system can be for example or relate to: Ophthalmology equipment such as phoropter, refractometer, pachymeter, ppt. biometrie, perimeter, refrakto-keratometer, refra. lensanalyzer, tonometer, anomaloskop, kontrastometer, endothelmicroscope, anomaloscope, binoptometer, OCT, rodatest, ophthalmoscope, RTA, lighting, machine vision, laser processing, mobile phone cameras, light show, printers, metrology, head worn glasses, medical equipment, robot cam, motion tracking, microscopes, telescopes, endoscopes, binoculars, research, surveillance camera, automotive, laser phosphor display, projectors, ophthalmic lenses, range finder bar code readers, and web cams.

Further features and advantages of the present inventions as well as embodiments of the present invention shall be described in the following with reference to the Figures, wherein
- Figs. 1 - 3: show schematical cross sectional views of an optical device according to the invention in the form of a tunable lens device having a first and a second optical element in the form of a transparent and elastically deformable membrane (e.g. thin glass);
- Fig. 4: shows a schematical cross sectional view of a modification of the embodiment shown in Figs. 1 - 3, wherein the tunable lens comprises a linear guiding means for guiding the movement of the magnetic flux guiding structure/lens shaper in the axial direction;
- Fig. 5: shows a schematical cross sectional view of an alternative embodiment, where the linear guiding means is provided by the magnetic flux guiding structure, which is supported by a spring member; further both the relative movement between the magnetic flux guiding structure and the magnetic flux return structure as well as the magnetic flux return structure are used to cool the device;
- Fig. 6: shows a schematical cross sectional view of an alternative embodiment with respect to the support of the magnetic flux guiding structure; further the optical device comprises light absorbing means facing the body and providing apertures for the passage of light through the body;
- Fig. 7: shows a schematical cross sectional view of an embodiment of a tunable lens having an alternative configuration of the magnetic flux guiding structure and the magnetic flux return structure (with respect to Figs. 5 and 6) as well as a tapered body;
- Fig. 8: shows a schematical cross sectional view of a variant of the embodiments shown in Figs. 5 and 6, wherein the first optical element attached to the body is itself formed as a lens;
- Fig. 9: shows a schematical cross sectional view of a variant of the embodiments shown in Figs. 1 to 4, wherein the magnetic flux guiding structure is suspended from a surrounding housing of the device via a spring element, wherein further the magnetic flux guiding structure is supported on the magnetic flux return structure via a spring member;
- Figs. 10 - 12: show schematical cross sectional views of an embodiment of the optical device according to the invention in the form of a tunable lens device having two opposed magnetic flux return structures and a magnetic flux guiding structure in between;
- Fig. 13: shows a schematical cross sectional view of a further embodiment of an optical device according to the invention in the form of a tunable lens, wherein the device further comprises an additional magnet to pre-tension the magnetic flux guiding structure;
- Figs. 14 - 15: show a schematical cross sectional views of a further embodiment of an optical device according to the invention in the form of a tunable prism, wherein the reluctance actuator means employs an array of first coils for tilting the magnetic flux guiding structure with respect to the magnetic flux return structure;
- Fig. 16: shows a schematical cross sectional view of a further embodiment of an optical device according to the invention in the form of a tunable mirror, wherein the reluctance actuator means employs an array of first coils for tilting the magnetic flux guiding structure with respect to the magnetic flux return structure;
- Fig. 17: shows a schematical cross sectional view of a further embodiment of an optical device according to the invention in the form of a tunable lens/mirror, wherein the reluctance actuator means employs an array of first coils for tilting the magnetic flux guiding structure with respect to the magnetic flux return structure, and for adjusting the curvature of the first optical element being formed as a completely or partially transparent elastically deformable membrane;
- Fig. 18: shows a schematical cross sectional view of a modification of the embodiment shown in Fig. 17 having a second magnetic flux return structure for providing a high speed tunable lens/mirror;
- Fig. 19: shows an embodiment of a magnetic flux guiding structure to which the first optical element is attached, which allows for an asymmetric deformation of the magnetic flux guiding structure and attached first optical element (e.g. membrane), particularly due to the presence of radial first recesses, so that said structure can be used for complex wavefronts and/or aberration corrections;
- Fig. 20: shows a modification of the structure shown in Fig. 19 which comprises first and second recesses so that the structure exhibits a meandering pattern;
- Fig. 21: shows a pattern of first coils that can be used within the reluctance actuator means with the magnetic flux guiding structures shown in Figs. 19 and 20;
- Fig. 22: shows in a plan view the arrangement of the first coils with respect to the first and second recesses of the magnetic flux guiding structures shown in Fig. 20;
- Fig. 23: shows a schematical cross sectional view of a further embodiment of an optical device according to the invention in the form of a tunable lens using an array of first coils and magnetic flux guiding structures as shown in Fig. 19 or 20;
- Figs. 24 - 26: show schematical cross sectional views of a modification of the embodiment shown in Figs. 10 to 12, wherein the optical device comprises two annular spring members for returning the magnetic flux guiding structure into an initial position and for preventing a pull-in of the reluctance actuator means;
- Fig. 27: shows a schematical cross sectional view of modification of the embodiments shown in Figs. 10 to 12 and 24 to 26 comprising an additional central magnetic flux return structure receiving spring members protruding from an annular plate member of the magnetic flux guiding structure;
- Figs. 28 - 30: views of embodiments of the central magnetic flux return structure and the embedded magnetic flux guiding structure;
- Fig. 31: shows a schematical cross sectional view of a further embodiment of the present invention having a cylindrical magnetic flux guiding structure comprising three annular magnets of different magnetization;
- Fig. 32: shows a schematical cross sectional view of a modification of the embodiment shown in Fig. 31;
- Fig. 33: shows a schematical cross sectional view of a modification of the embodiment shown in Fig. 13;
- Fig. 34: shows a schematical cross sectional view of a modification of the embodiment shown in Fig. 33;
- Figs. 35 to 37: show schematical cross sectional views of a modification of the embodiment shown in Figs. 24 to 26; and
- Figs. 38 to 39: show schematical cross sectional views of a modification of the embodiment shown in Fig. 1.

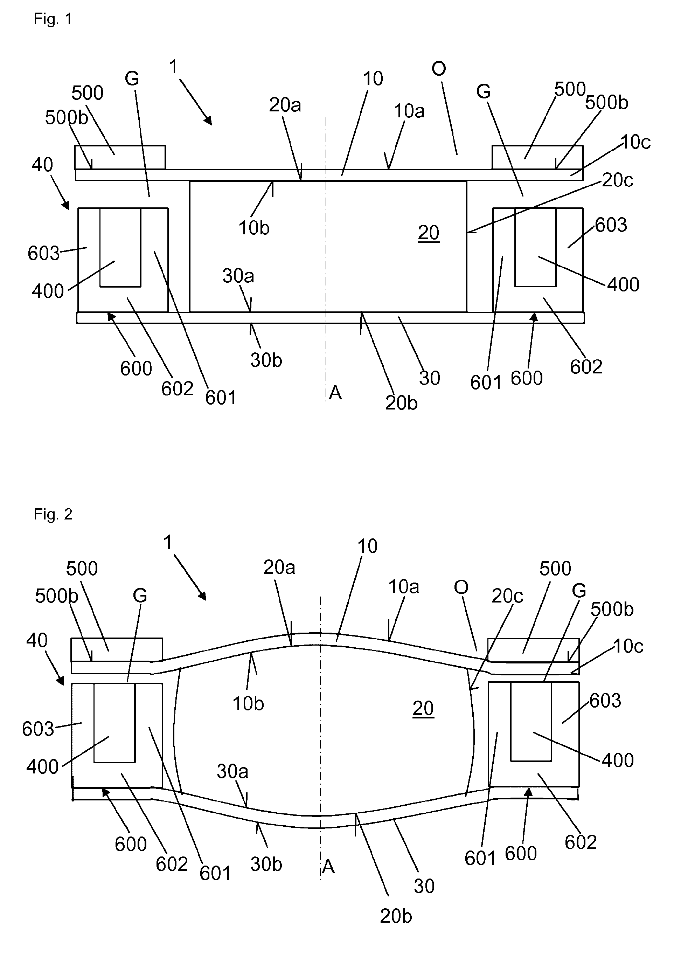

Figs. 1 to 3 show an optical device 1 according to the invention in the form of a tunable lens. The optical device 1 comprises a first optical element 10 being formed as an elastically deformable transparent membrane (see also above). The first membrane 10 has a first surface 10b that faces a first surface 30a of a second optical element 30 that is formed as an elastically deformable transparent membrane, too.

The two optical elements 10, 30 essentially extend along parallel extension planes in a flat state. An axial direction A is oriented perpendicular to these extension planes and coincides with an optical axis of the optical device 1.

The device 1 further comprises an elastically deformable transparent rigid body (e.g. a polymer block) that is arranged between the two membranes 10, 30, wherein said body 20 comprises a first surface 20a and a second surface 20b facing away from the first surface 20a of said body 20, wherein the first surface 20a of said body 20 is attached to the first surface 10b of the first membrane 10, and wherein the second surface 20b of said body 20 is attached to the first surface 30a of the second membrane 30.

Thus, light may enter the optical device 1 through the first membrane 10, pass through body 20 and may then exit device 1 through the second membrane 30. Adjusting the curvature of at least one of the membranes 10, 20 thus turns the device 1 into a tunable lens.

For this, the first membrane 10 is further attached with an outer edge region 10c, namely with its second surface 10a that faces away from the first surface 10b of the first membrane 10, to a first surface 500b of a magnetic flux guiding structure 500 in the form of an annular plate member 500 that delimits a central aperture O for the passage of light through the device 1 and faces a first magnetic flux return structure 600. The two structures 500, 600 are separated by a first gap G and may be formed out of a material or may comprise a material (e.g. iron) as specified above (this also holds for the other embodiments described further below).

The first magnetic flux return structure 600 comprises a circumferential first wall 601 extending adjacent to the first coil 400, namely between said body 20 and said first coil 400, wherein said first wall 601 of the first magnetic flux return structure 600 is connected to a second wall 603 of the first magnetic flux return structure 600 via a bottom 602 of the first magnetic flux return structure 600. The second wall 603 surrounds said first coil 400 so that the first coil 400 is arranged between the first and the second wall 601, 603. The bottom 602 extends adjacent to the first coil 400 on a side of the first coil 400 facing away from the first membrane 10. The first coil 400 may comprise an electrically conducting conductor (e.g. wire) that is wound around said axial direction A. The first coil 400 thus surrounds body 20 of the device 1.

The second membrane 20 is attached to bottom 602 of the return structure 600. The body 20 and the membranes 10, 30 can thus be deformed by moving the magnetic flux guiding structure 500 towards the return structure 600 in the axial direction A thereby reducing the first gap G.

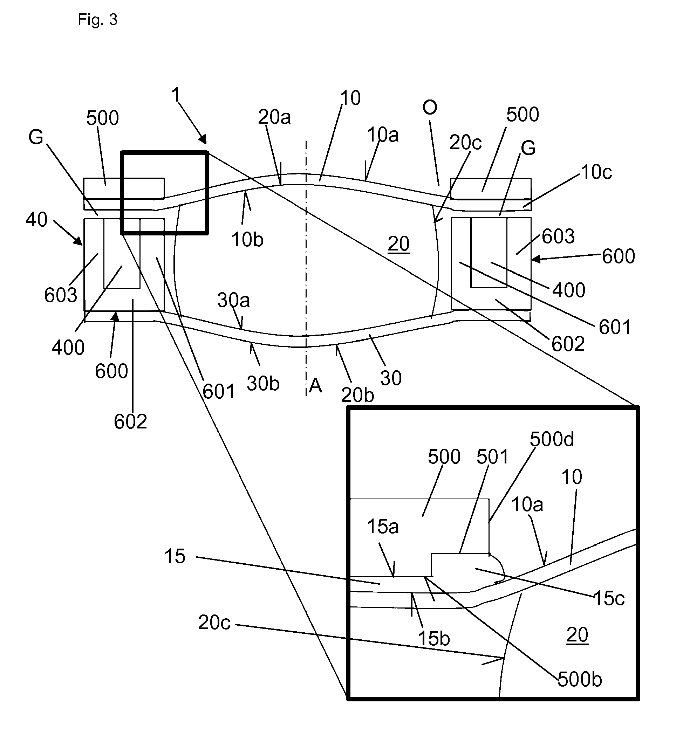

The body 20 further comprises a circumferential surface 20c that connects the first and second surface 20a and 20b and faces the surrounding first return structure 600. When moving the magnetic flux guiding structure 500 in the axial direction A towards the return structure 600 the two membranes 10, 30 develop a convex curvature as shown in Fig. 3 while the circumferential surface 20c of the body 20 bulges towards the surrounding return structure 600. In this way, the focal length of this tunable lens 1 can be adjusted.

In detail, for moving the magnetic flux guiding structure 500 axially along axial direction A, the optical device 1 comprises a reluctance actuator means 40 that is designed to move the first membrane 10 so as to elastically deform said body 20 and adjust said curvatures as described above. Said reluctance actuator means 40 comprises said first coil 400, said first magnetic flux return structure 600, and said annular magnetic flux guiding structure 500 attached to the first membrane 10. The device further comprises an energy source or a connection to such a source (this generally applies to all embodiments of the present invention) for applying a current to said first coil 400 such that magnetic flux generated by the first coil 400 is guided by the first magnetic flux return structure 600 and the magnetic flux guiding structure 500 via said first gap G. This results in a reluctance force that reduces said gap G, i.e., moves the magnetic flux guiding structure 500 and therewith the first optical element 10 towards the first magnetic flux return structure 600 to produce the bulged configuration of the tunable lens 1 shown in Figs. 2 and 3.

In order to return the body 20 and optical elements 20, 30 into their respective initial state when the current is switched off, said elastically deformable body 20 and the optical elements 10, 30 are designed to provide a restoring force when deformed by the reluctance actuator means 40 such that said restoring force helps moving the magnetic flux guiding structure 500 back into an initial position when said current is switched off.

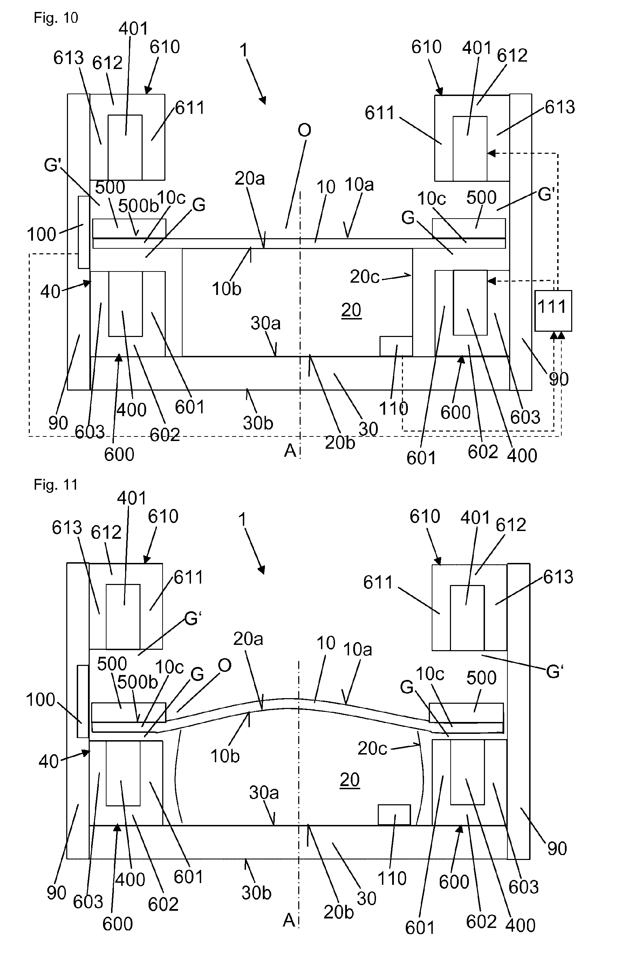

Generally, in all embodiments of the present invention, the device 1 is designed to control said current so as to adjust the curvature of the first and/or second optical element 10, 30 and/or so as to adjust the shape of the body 20. For this, the device 1 may comprise a control unit (an exemplary control unit 111 is indicated in Fig. 10, but may be present in all embodiments) that cooperates with a position sensor (an exemplary position sensor 100 is indicated in Figs. 10 to 12, but may be present in all embodiments) that senses an actual spatial position of the magnetic flux guiding structure 500 and controls said current such that the magnetic flux guiding structure 500 approaches a currently desired reference spatial position. Further, the control unit 111 may cooperate with a temperature sensor 110 (an exemplary temperature sensor 110 is indicated in Figs. 10 to 12 for instance, but may be present in all embodiments). Further, in case more than one first coil 400 is present, the control unit 111 then controls a corresponding number of currents to adjust a desired spatial position of the magnetic flux guiding structure 500 (see also below). The movements generated in this way may comprise an axial movement and/or a tilting movement of the magnetic flux guiding structure 500 (see also below).

Further, as shown in Fig. 3, in order to protect the first membrane 10 with respect to the lens shaper/magnetic flux guiding structure 500 upon deforming the first membrane 10, the first membrane 10 may be attached to the magnetic flux guiding structure/plate member 500 via a flexible (e.g. glue) layer 15 having a first side 15a connected to the plate member 500 and a second side 15b connected to the first membrane 10. Preferably, the magnetic flux guiding structure (e.g. annular plate member) 500 comprises a recess 501 at an inner edge 500d of the magnetic flux guiding structure 500 that is filled by said flexible layer 15 which therefore develops a broadened edge region 15c that protrudes out of said recess 501 beyond said inner edge of magnetic flux guiding structure 500 (i.e. into aperture O). The first membrane 10 is therefore prevented from contacting a possibly sharp edge of the magnetic flux guiding structure 500 which helps protecting first membrane 10. Furthermore, the layer 15 delimits a curvature of the first optical element due to its broadened edge region 15c about which the first optical element 10 is bent upon a corresponding deformation of the first optical element 10/body 20. Thus, the flexible layer 15 helps providing a smoother transition of the first membrane 10 into the deformed lens shape.

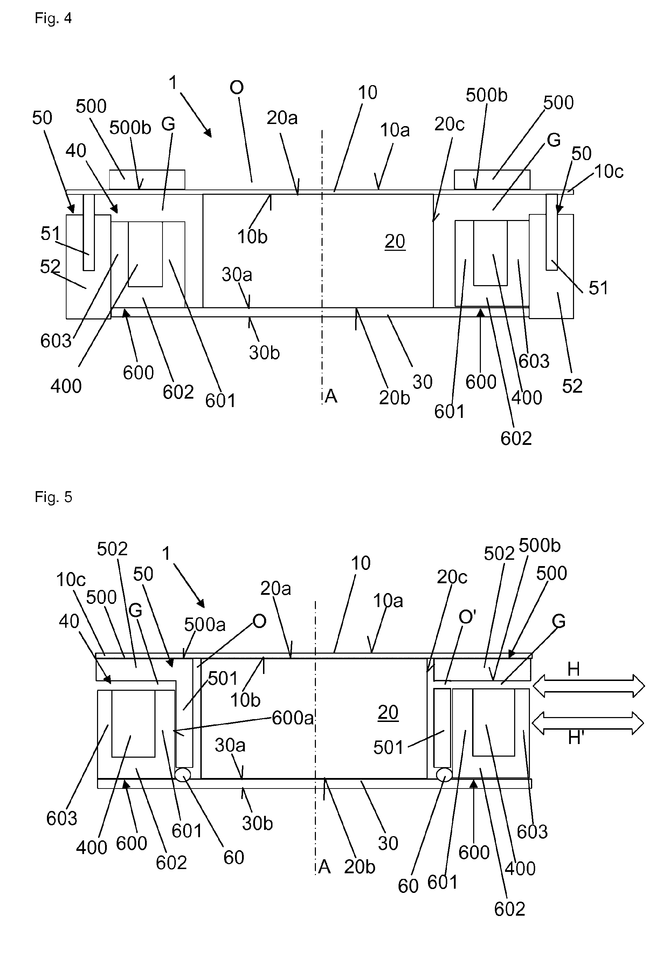

As shown in Fig. 4 the optical device 1 may comprises a guiding means 50 for guiding said axial movement of the magnetic flux guiding structure 500 along said axial direction A. Here, said guiding means 50 comprises at least one pin 51 (two pins 51 are shown in Fig. 4) which is connected to the first optical element 10, namely to a portion of the outer edge region 10c extending past plate member 500, or alternatively to the magnetic flux guiding structure 500. Said at least one pin 51 is designed to slide in an associated recess of the optical device 1 that extends along the axial direction A. The recess may be formed in a housing part 52 of the optical device 1. The housing part 52 may be connected to first the magnetic flux return structure 600 and may surround the latter.

In the embodiment shown in Fig. 5 the device 1 is particularly configured as described above, wherein in contrast to Fig. 1 to 4, the magnetic flux guiding structure 500 comprises an annular plate member 502 having said aperture O for the passage of light, from which a circumferential protrusion 501 protrudes from an inner edge region of said plate member 502, which inner edge region delimits said aperture O of the plate member 502.

Said protrusion 501 now extends between said body 20 of the optical device 1 and the first wall 601 of the first magnetic flux return structure 600, wherein the protrusion 501 is designed to slide along the first wall 601, namely on a surface 600a of the return structure 600 that faces said body 20, when the magnetic flux guiding structure is moved in said axial direction A which provides for a linear guiding 50 of the magnetic flux guiding structure 500 in the axial direction A.

Further, due to the fact, that the second wall 603 (e.g. formed out of a metal) forms an outer wall/surface of a housing of the optical device 1, an effective cooling H' of the optical device 1 can be assured. Further, the relative movement of the magnetic flux guiding structure 500 with respect to said return structure 600 increases and decreases said first gap G thus pumping air (or other fluids) H into and out of the first gap G, which provides for a thorough ventilation and thus further cooling the optical device 1. The optical device 1 may further comprise an air exchange hole O' (such an air exchange hole may be present in all embodiments) which connects a region of the optical device 1 adjacent to said body 20 (e.g. an interior space in which said body 20 is arranged) to an ambient atmosphere. As indicated, the air exchange hole O' may be in fluid connection with said first gap G'. In this way - when body 20 is deformed - air can enter and leave said region next to the body 20 such that a reluctance force for deforming body 20 does not need to compress air adjacent to body 20.

Further, in contrast to Figs. 1 to 4, the first optical element 10 is attached with its outer edge region 10c to a second surface 500a of the magnetic flux guiding structure 500/plate member 502 that faces away from the second optical element 30.

Furthermore, for helping to return the magnetic flux guiding structure 500 into its initial position, said structure 500 is supported on the second optical element 30 via an elastically deformable annular spring member 60 (e.g. O-ring) that is compressed when the first G is reduced upon axial movement of the magnetic flux guiding structure 500 and thus provides a restoring force pushing the structure 500 into its initial position when said current is switched off. The spring member 60, which is preferably formed out of a silicone, is also preventing a possible pull-in of the magnetic flux guiding structure 500 onto the first return structure 600. To achieve this, the increase in the restoring force is larger than the increase in the reluctance force for a fixed current, when the first gap G decreases.

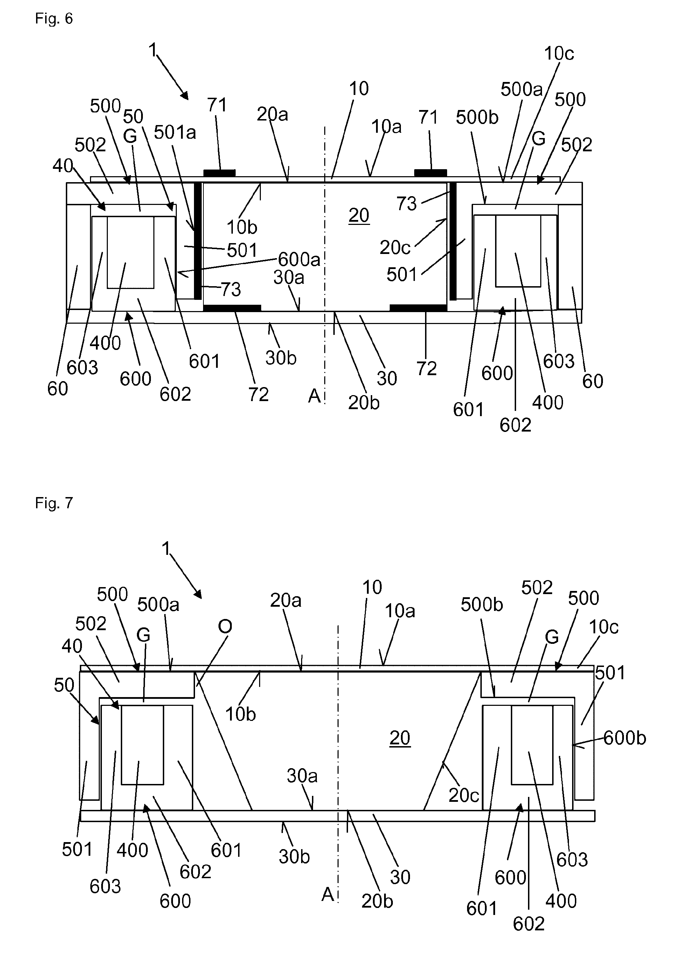

Fig. 6 shows a modification of the embodiment shown in Fig. 5, wherein in contrast to Fig. 5 the spring member 60 is formed cylindrically, surrounds the magnetic flux return structure 600 and supports said annular plate member 502 of the magnetic flux guiding structure.

Further, for absorbing unwanted light, the optical device 1 shown in Fig. 6 comprises light absorbing means 71, 72, 73 which may be formed as a coating or as separate parts. Here, such a light absorbing means 73 is provided on a surface 501 a of the magnetic flux guiding structure 500/protrusion 501 which faces and surrounds said body 20, as well as on the first and second optical element 10, 30 so as to delimit an aperture of these elements 10, 30 for the passage of light. In principle, such light absorbing means may be employed in all embodiments of the present invention.

The embodiment shown in Fig. 7 comprises, in contrast to Figs. 5 and 6, a protrusion 501 of the magnetic flux guiding structure 500 that protrudes from an outer edge region of said plate member 502 such that said protrusion 501 now surrounds the second wall 603 of the first magnetic flux return structure 600 and is adapted to slide along the second wall 603, namely on a surface 600b of the return structure 600 facing away from said body 20, when the magnetic flux guiding structure 500 is moved in said axial direction A. Thus, again, the two structures form a linear guiding means 50 for guiding the movement of the magnetic flux guiding structure 500 along the axial direction

Further, as shown in Fig. 7, the body 20 of the device 1 is tapered towards the second optical element 30. This allows one to control the resulting lens shape of the first membrane 10.

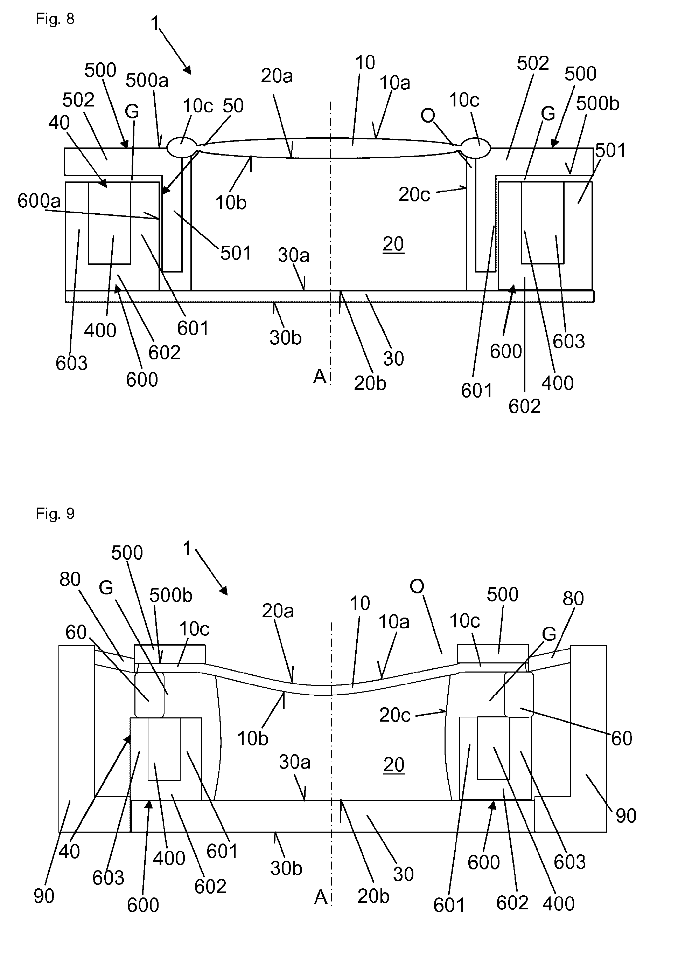

Fig. 8 shows a further embodiment of the present invention of the kind shown in Figs. 5 and 6, wherein - in contrast to Figs. 5 and 6 - the first optical element 10 is itself formed as a lens whose curvature can be adjusted in addition by means of the reluctance actuator means 40 as described above. Here, the first optical element 10 is attached to an inner edge of plate member 502 via an e.g. circumferential edge region 10c of the first optical element 10.

Fig. 9 shows a further embodiment of the present invention of the kind shown in Fig. 1, wherein in contrast to Fig. 1, the plate member 500 is supported on the magnetic flux return structure 600 via an elastically deformable (e.g. annular) spring member 60 for pushing the plate member 500 back into its initial position after actuation and for preventing pull-in of the reluctance actuator means 40. Further, the plate member 500 is suspended from a surrounding housing part 90 of the device 1 via a spring member 80. This spring member 80 provides a radial positioning of the magnetic flux guiding structure 500 and an axial guiding of the magnetic flux guiding structure 500 while also providing a restoring force allowing for a pre-tensioning of the lens body 20 and the first membrane 10 and of components connected thereto.

As can be seen from Fig. 9, said body 20 is pre-shaped in a way that the curvature of the first membrane 10 is concave (as well as of the lateral surface 20c of the body 20) and will flatten upon axial movement of the plate member 500 towards return structure 600. In Fig. 9, the second optical element is preferably a rigid transparent optical element 30 (e.g. window).

Figs. 10 to 12 show an embodiment of the kind shown in Fig. 1, wherein in contrast to Fig. 1 the second optical element 30 is preferably a rigid transparent optical element 30 (e.g. window) and the reluctance actuator means 40 comprises a second electrically conducting coil 401, a second magnetic flux return structure 610 being arranged adjacent to said second coil 401, wherein said magnetic flux guiding structure 500 is separated from said second magnetic flux return structure 610 by a second gap G'.

Again, the second magnetic flux return structure 610 comprises a circumferential first wall 611 extending adjacent to the second coil 401, wherein said first wall 611 of the second magnetic flux return structure 610 is connected to a second wall 613 of the second magnetic flux return structure 600 via a bottom 612 of the second magnetic flux guiding structure 600. The second wall 613 surrounds said second coil 401 so that the second coil 401 is arranged between the first and the second wall 611, 613. The bottom 612 extends adjacent to the second coil 401 on a side of the second coil 401 facing away from the first membrane 10. The second coil 401 may comprise an electrically conducting conductor (e.g. wire) that is wound around said axial direction A.

The second return structure 610 faces the first return structure 600, wherein the first and the second coil 400, 401 face each other.

Now, a current can be applied to both coils 400, 401 which means that a bidirectional actuation of the plate member 500 is possible along axis A.

For controlling of the bidirectional movement of plate member 500 as already described above, a position sensor 100 is arranged e.g. on a circumferential housing part 90 that connects the two return structures 600, 610 and surrounds them. The position sensor is preferably present in all embodiments of the present invention and is designed for sensing the position of the magnetic flux guiding structure 500, particularly with respect to some reference point of the optical device 1.

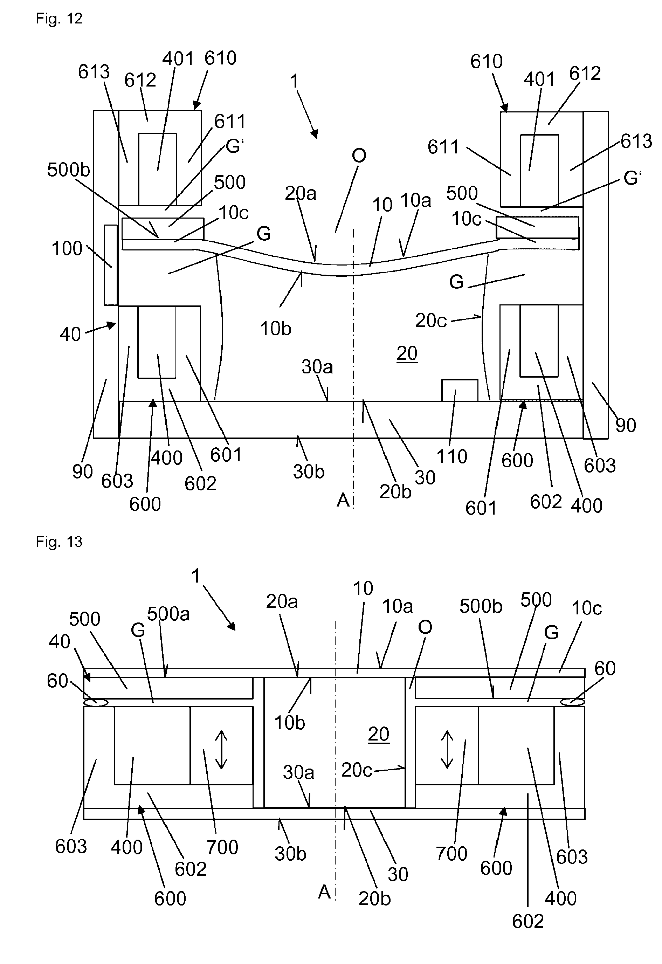

Fig. 10 shows the first membrane 10 in an initial state when no current is applied to the coils 400, 401. Fig. 11 shows the first membrane 10 developing a convex curvature upon applying a current to the first coil 400, while Fig. 12 shows the first membrane 10 developing a concave curvature upon applying a current to the second coil 401.

Further, by means of a temperature sensor 110 the temperature of the body can be sensed which allows for compensating a temperature-induces expansion of body 20 (see above).

Further, Fig. 13 shows an embodiment of the kind shown in Fig. 1 wherein in contrast to Fig. 1 the first optical element 10 is attached to the first side 500a of the plate member with its outer edge region 10c. Further, the first wall 601 of the return structure is not present, but substituted by a magnet 700 comprising a magnetization parallel to said axial direction A, which magnet 700 is supported on bottom 602 of the return structure and is arranged adjacent to first coil 400. Furthermore, the magnetic flux guiding structure is coupled to the first magnetic flux return structure 600 an annular spring member 60 positioned between the second wall 603 and the plate member 500 in the first gap G. Here, the magnet 700 serves for exerting a permanent force on the magnetic flux guiding structure 500 that tends to attract the latter towards the first magnetic flux return structure 600 so as to pre-tension said spring member 60. Thus despite the fact, that the reluctance actuator means 40 in Fig. 13 only has one first coil 400, a bidirectional movement of the plate member 500 is possible. In particular, when the current flowing through the first coil 400 is creating a magnetic flux which is counteracting the magnetic flux of the (e.g. permanent) magnet 700, the reluctance force decreases and the spring member 60 pushes the plate member 500 away from the first magnetic flux return structure 600. If the current is flowing in the opposite direction, the magnetic flux is enhanced and the reluctance force increases, thus reducing the first gap G. This type of a reluctance actuator means 40 is also known as variable reluctance actuator means 40.

In the embodiments described so far, the optical elements 10, 30 and body 20 are preferably configured such that the optical device 1 forms a tunable lens with axial adjustment of the magnetic flux guiding structure 500 (corresponding e.g. to the first and second configuration described in the beginning above). Here, light enters through the transparent first optical element 10, passes the transparent body 20 and exits the lens through the transparent second optical element 30, which may also be a rigid transparent optical element (e.g. a window) corresponding to e.g. the second configuration described initially. By way of adjusting the curvature of the first and/or second optical element 10, 30 the focal length can be tuned.

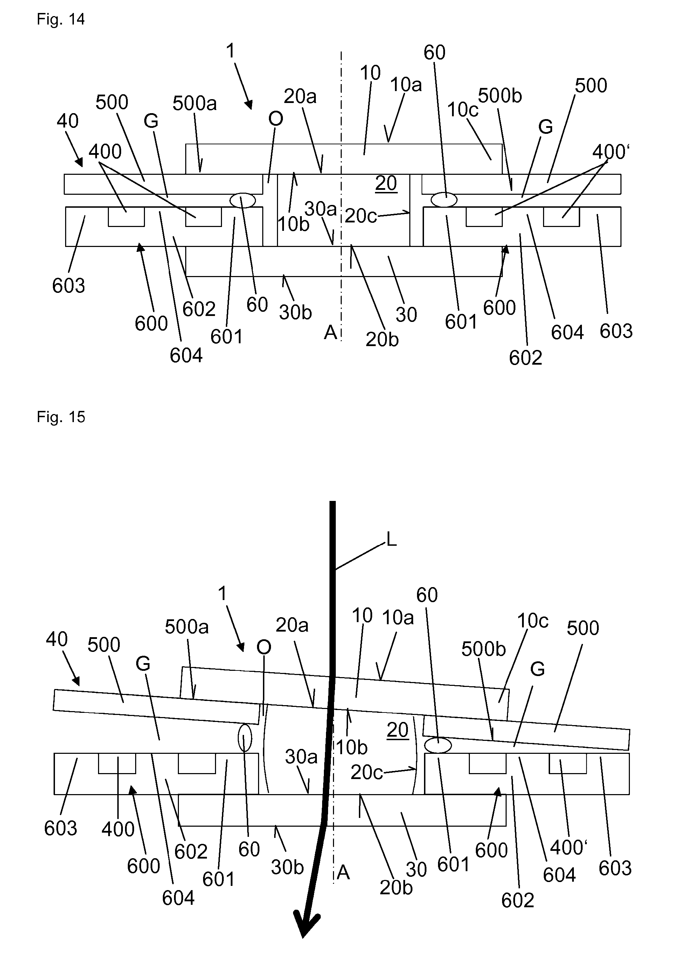

Now, Fig. 14 shows an embodiment, where both optical elements 10, 30 are rigid transparent optical elements (e.g. windows) 10, 30. The second optical element 30 extends along an extension plane, wherein said axial direction A is oriented perpendicular to this extension plane. In the state shown in Fig. 14, the first optical element 10 extends parallel to said extension plane as well.

Again, the device 1 comprises an elastically deformable transparent rigid body (e.g. a polymer block) that is arranged between the two optical elements 10, 30, wherein said body 20 comprises a first surface 20a and a second surface 20b facing away from the first surface 20a of said body 20, wherein the first surface 20a of said body 20 is attached to the first surface 10b of the first optical element 10, and wherein the second surface 20b of said body 20 is attached to the first surface 30a of the second optical element 30.

Thus, light may enter the optical device 1 through the first optical element 10, pass through body 20 and may then exit device 1 through the second optical element 30.

Further, the first optical element 10 is attached with an outer edge region 10c, namely with its first surface 10b to a second surface 500a of a magnetic flux guiding structure 500 in the form of an annular plate member 500. The plate member 500 delimits a central aperture O for the passage of light through the device 1 and faces a first magnetic flux return structure 600 with a first surface 500b that faces away from said second surface 500a of the plate member 500. The two structures 500, 600 surround body 20 and are separated by a first gap G along said axial direction A.

As indicated in Fig. 15, the plate member 500 and thus the first optical element 10 can be tilted with respect to the second optical element 30 for forming the body 30 into a prism. Thus, a tunable prism for deflecting a light beam L is provided.

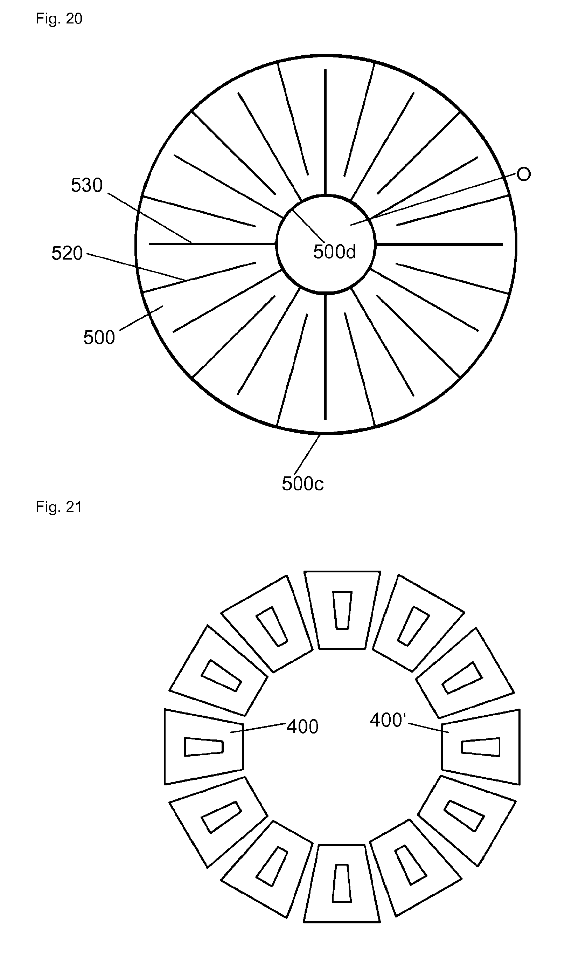

In order to be able to provide said tilting movement (as well as eventually an axial movement, see below) the reluctance actuator means 40 comprises - besides the two structures 500, 600 - a plurality of electrically conducting first coils arranged adjacent said first magnetic flux return structure 600, particularly, two, three, four or even more first coils (e.g. twelve). Preferably, said first coils denoted here exemplary as 400, 400' are arranged around said body 20 such that they face the first magnetic flux guiding structure 500, respectively. Each first coil 400, 400' is preferably equally spaced from its neighboring first coils 400, 400', particularly (cf. also Fig. 21).

The first magnetic flux return structure 600 may be formed as a single connected structure, but may also consist of several separate sub-structures (or parts) that may each be associated to a different first coil or a different group of first coils. The same may apply for the second coils 401, 401' and the second return structure 610 introduced below.

In each case, as shown in Fig 14, the first magnetic flux return structure 600 or its respective part/sub-structure 600 comprises a first wall region 601 and a second wall region 603 connected via a bottom region 602, wherein the individual first coil 400, 400' is arranged between the first and the second wall region 601, 603 and on top of said bottom region 602. Further a third wall region 604 protrudes from the bottom region 602 into the interior of the respective first coil 400, 400'. Of course, the first coils 400, 400' may be embedded into a single connected first magnetic flux return structure 600, where the first, second and bottom regions 601, 603, 602 are connected to their neighboring counter-parts.

Each first coil 400, 400' may comprise an electrically conducting conductor (e.g. wire) that is wound about an axis that runs parallel to said axial direction (cf. Fig. 21 showing a plan view of first coils 400, here the conductors are wound about the respective central rectangle).

Now, in order to tilt plate member 500 as shown in Fig. 15 a current may be applied to first coil 400' leading to a reluctance force that attracts the opposed region of the plate member 500 causing a tilting movement of the plate member 500 which allows for deflecting beam L. In order to restore the initial position of plate member 500 when the current is switched off, the plate member 500 is supported via an e.g. annular elastically deformable spring member 60 on return structure 600, wherein said spring member 60 extends along (e.g. adjacent) said aperture O of the plate member 500. Upon deformation, the spring member 60 generates a restoring force that is used to return the plate member 500 into its initial position. Furthermore, the spring member 60 prevents a pull-in of the plate member 500 onto the first magnetic flux return structure 600.

Since several first coils 400, 400' may be present (e.g. three), the plate member 500 can be arbitrarily tilted in all directions within a certain range of angles by applying current to said first coils 400, 400' correspondingly.

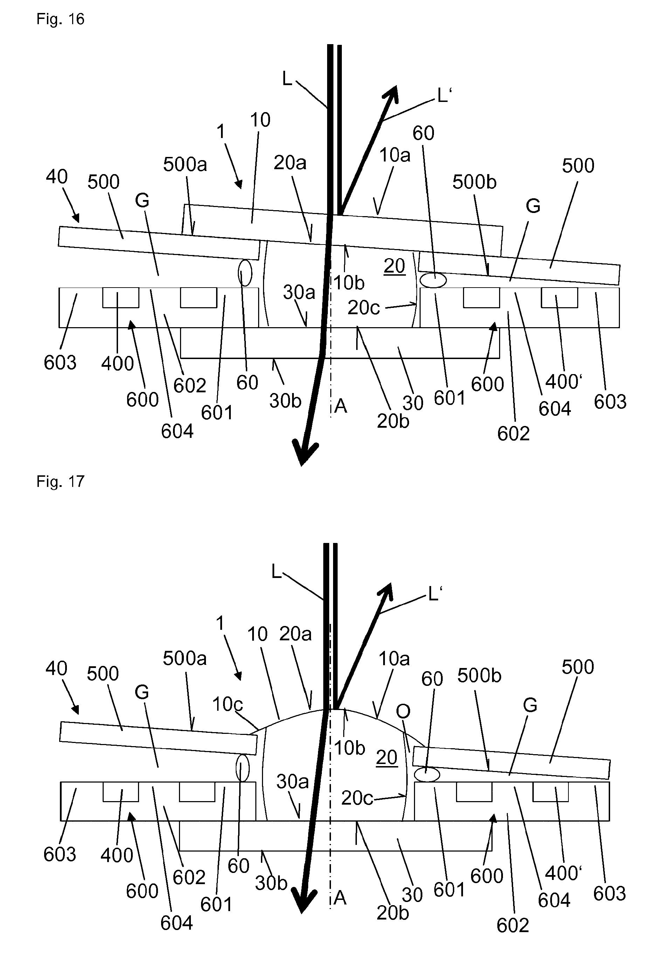

Fig. 16 shows a modification of the embodiment shown in Figs. 14 and 15, where the first optical element 10 is now configured to also reflect light L'. In this way, a tiltable mirror and/or prism (depending on the amount of light L' that is reflected) can be provided.

Further, the first optical element 10 can also be a transparent and elastically deformable membrane 10 such that an adjustment of the curvature of the first membrane 10 an be achieved e.g. by an axial movement of the plate member along axis A. Alternatively or in addition the plate member 500 can be tilted. In this way the device 1 can be used as a tunable lens having a tunable prism for beam deflection (e.g. image stabilization). In case the first membrane 10 also reflects light L' as shown in Fig. 17 a tunable mirror can be provided. Furthermore, the first optical element 10 can be transparent and rigid, and the second optical element 20 can be transparent and elastically deformable (e.g. membrane), so that the first optical element 10 can serve as tilting element and the second optical element 20 can be used for focusing the light enabling a separation of the tilting and focusing functionalities, while still using the same reluctance actuator means 40.

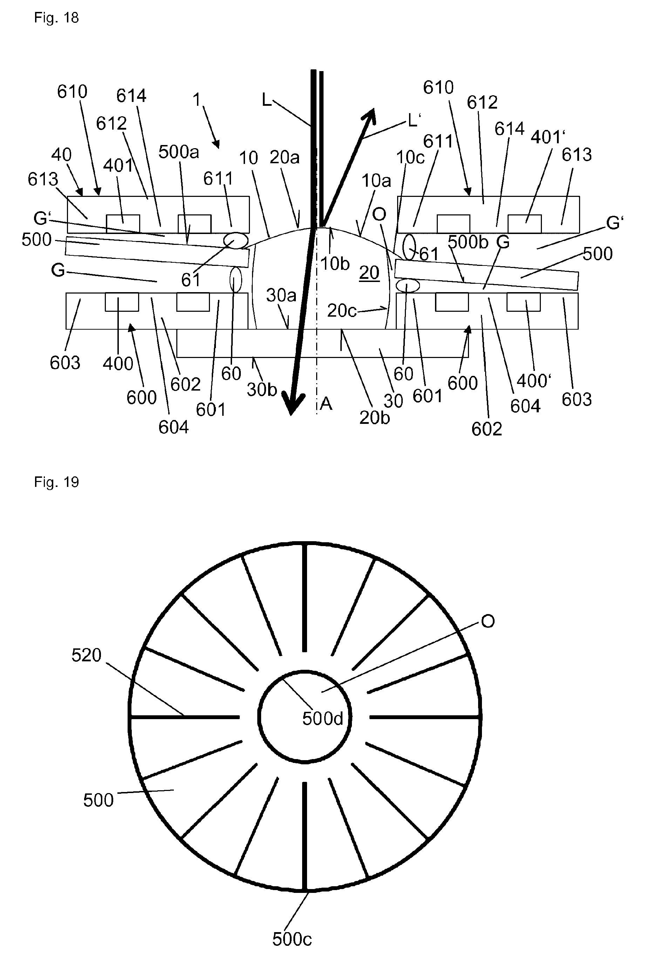

As indicated in Fig. 18, the embodiments shown in Figs. 14 to 17 can be modified by providing a plurality of electrically conducting second coils 401, 401' arranged adjacent a second magnetic flux return structure 610 which is arranged such that it faces the first return structure 600, wherein the plate member 500 is arranged between the two return structures 600, 610 such that it defines a first gap G with the first return structure 600 and a second gap G' with the second return structure 610.

Said second coils 401, 401' are arranged along said magnetic flux guiding structure/plate member 500 such that they face the plate member 500, respectively, wherein particularly each second coil 401, 401' is equally spaced from its neighboring second coils 401, 401' along said plate member 500. Further, each second coil 401, 401', particularly faces an associated first coil 400, 400'. Again, the second coils 401, 401' may be embedded into a single second magnetic flux return structure 610 or a corresponding number of individual parts/sub-structures as described above with respect to the first coils 400, 400'. The bottom regions 602, 612 of the opposed first and second magnetic flux return (sub) structures 600, 601 face away from each other so that each first coils faces its associated second coil 401, 401'.

Further, in order to return the magnetic flux guiding structure 500 into its initial position as well as to prevent the magnetic flux guiding structure 500 from becoming attached to one of the return structures 600, 610, a first and a second annular spring member 60, 61 is provided, wherein the first annular spring member 60 is arranged between the first magnetic flux return structure 600 and the plate member 500, and wherein the second annular spring member 61 is arranged between the second magnetic flux return structure 610 and the plate member 500. Both spring members 60, 61 are designed to provide a restoring force - when compressed - that prevents the magnetic flux guiding structure 500 from becoming attached to either of the two magnetic flux return structures 600, 610 (so called pull-in effect). For this, the first spring members 60 is designed to provide for a restoring force that increases faster than the reluctance force with decreasing first gap G. The same holds for the second spring member 61 with respect to the second gap G'. Further, an air exchange hole may be present as described above (not indicated in Fig. 18).The benefit of the configuration shown in Fig. 18 is due to the possibility to tilt and axially move the plate member even faster since an active bidirectional actuation is now possible.

In order to allow also for complex asymmetric deformations of the first optical element 10, the magnetic flux guiding structure/plate member 500 can be designed to be deformable as shown in Figs. 19 and 20.

According to Fig. 19 said e.g. circular plate member 500 with its central aperture O comprises a plurality of first recesses 520, wherein each first recess 520 extends in a radial direction of the plate member 500 and starts at an outer edge 500c of the plate member 500 and ends spaced apart from an inner edge 500d of the plate member 500 which delimits said aperture O.

Since the magnetic flux guiding structure 500 is often formed out of a metal such as iron, said recesses 520 increase deformability of the plate member 500 enormously. At the same time all sectors formed by the recesses 520 are connected to each other for magnetic flux guiding.

Further, as shown in Fig. 20 the plate member may comprise a plurality of second recesses 530, wherein each second recess 530 extends in a radial direction of the plate member 500, wherein each second recess 530 starts at the inner edge 500d of the plate member 500 and ends spaced apart from the outer edge 500c of the plate member. Preferably a second recess 530 is arranged between each two neighboring first recesses 520.

When both kinds of recesses 520, 530 are present, the plate member 500 comprises a meandering pattern.

Preferably, the sectors defined by the first and/or second recesses 520, 530 are of equal size.

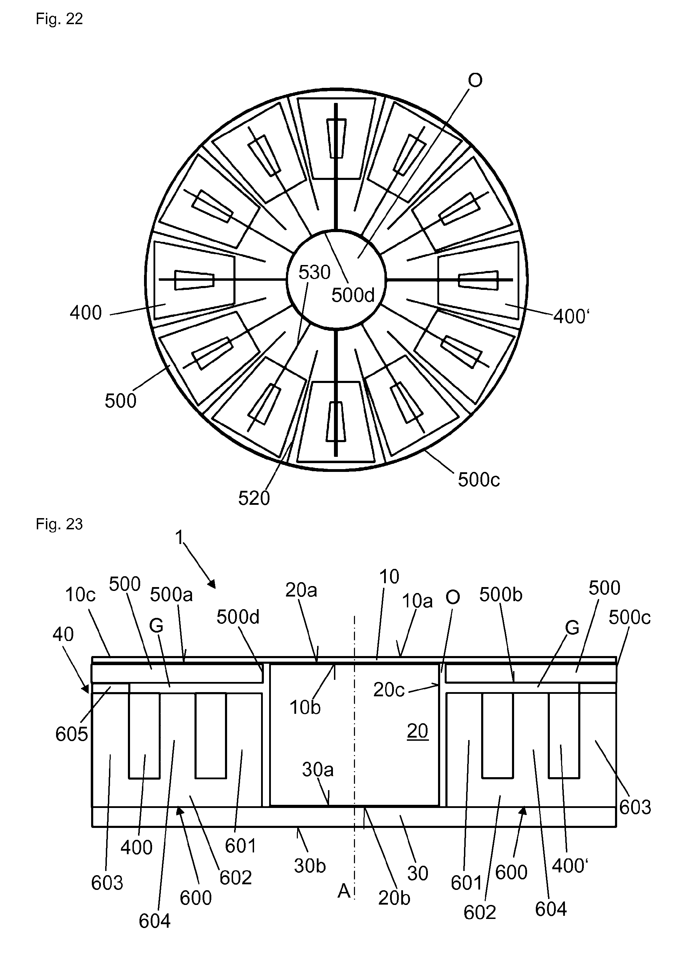

Furthermore, Fig. 23 shows an embodiment using such a deformable plate member 500 according to Figs. 19 or 20. The device 1 is essentially configured as described with respect to Fig. 14, wherein in contrast to Fig. 14 the first optical element 10 is a transparent and elastically deformable membrane 10 that is attached to the second surface 500a of the plate member 500, and wherein instead of said spring member 60 the plate member 50 and the return structure 600 are coupled by a magnetic flux guiding ring member 605 which rests on the second wall (region) 603 and supports plate member 500 along its outer edge 500c.

Preferably the reluctance actuator means 40 comprises e.g. 12 first coils 400, 400' (cf. Fig. 21) which are arranged with respect to the recesses 520, 530 as shown in Fig. 22, where each first coil 400, 401 is arranged below a second recess 530, and - when looking along the extension plane of the plate member 500 - between two neighboring first recesses 520. In this way, by applying current to a single coil 400, the plate and thus the first optical element (and body 20) can be locally deformed, i.e. essentially merely the sectors facing the respective first coil 400.

This can be employed e.g. for complex wavefronts/ aberration corrections in the framework of an asymmetrically tunable optical device 1.

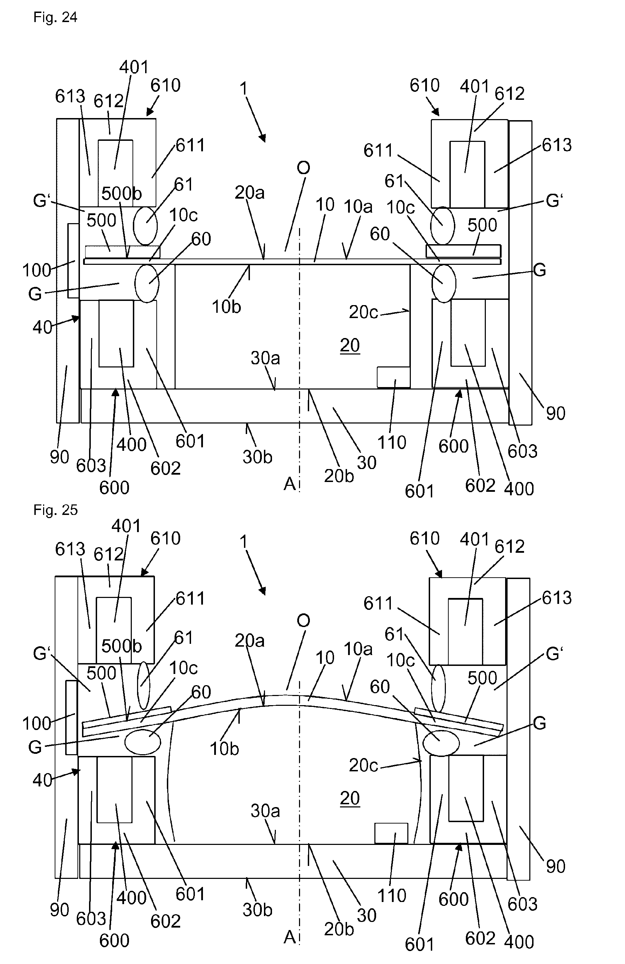

Further, Figs. 24 to 26 show a modification of the embodiment shown in Figs. 10 to 12, wherein in contrast to Figs. 10 to 12 two annular spring members 60, 61 as described with respect to Fig. 18 are present for returning the magnetic flux guiding structure 500 back to an initial position and for preventing said pull-in effect of the reluctance actuator means 40.

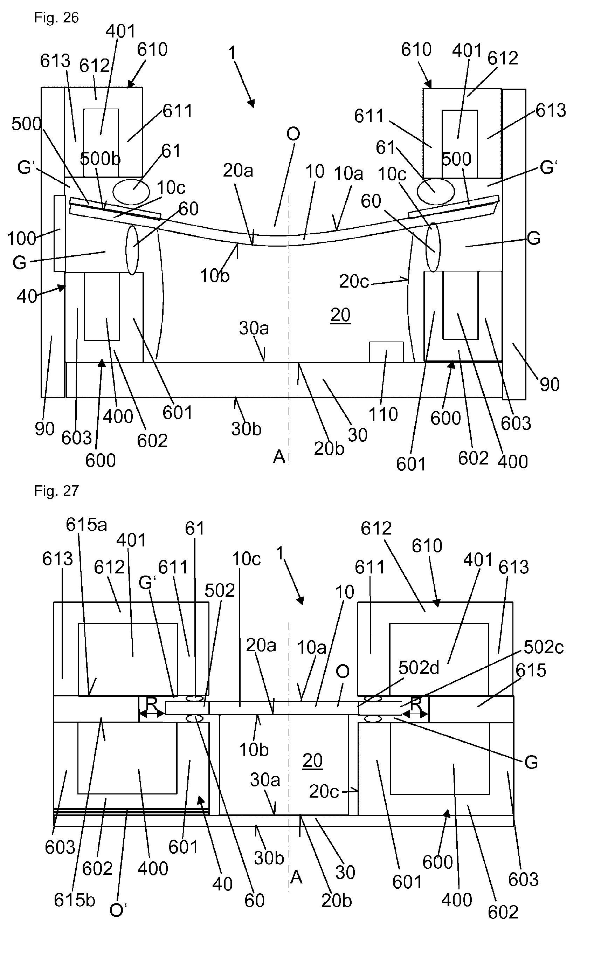

Further, Fig. 27 shows an embodiment of the present invention having a reluctance actuator means 40 comprising a first magnetic flux return structure 600 facing a second magnetic flux return structure 610 along the axial direction A. A first coil 400 configured as described with respect to Figs. 10 to 12 is embedded in the first return structure 600 while a second coil 401 configured in the same way is embedded in the second return structure 610. Each return structure 600, 610 comprises a circumferential first wall 601, 611 extending adjacent to the associated coil 400, 401, wherein each first wall 601, 611 is connected to a second wall 603, 613 of the respective magnetic flux return structure 600, 610 via a bottom 612 of the respective magnetic flux guiding structure 600, 610. The second walls 613 surround the associated coil 400, 401 so that the respective coil 400, 401 is arranged between the respective first and second wall 601, 603, 611, 613. The bottoms 602, 612 of the return structures 600, 610 are arranged on a side of the respective coil 400, 401 which sides face away from each other, while the coils 400, 401 face each other along the axial direction A.

A magnetic flux guiding structure 502 in the form of an annular plate member 502 is arranged between the first and the second return structure 600, 610, namely between the two first walls 601, 611 such that a first gap G is formed between the plate member 502 and the first return structure 600 as well as a second gap G' between the plate member 502 and the second return structure 610. Further an annular central magnetic flux return structure 615 is arranged between the two return structures 600, 610, wherein a first surface 615a of the central return structure 615 contacts the second return structure 610 while a second surface 615b of the central return structure 615 contacts the first return structure 610, wherein the second surface 615b faces away from the first surface 615a of the central return structure 615. The central magnetic flux return structure 615 is designed to guide the magnetic flux generated by the coils 400, 401.

Further, there is a radial gap R between an outer edge 502d and the surrounding central magnetic flux return structure 615, wherein preferably the radial gap R is larger than the first and the second gap G, G' and/or the spring members 60, 61 are configured to prevent a lateral movement perpendicular to the axial direction A of the plate member 502 and therefore a pull-in of the latter.

Further, a first optical element 10 in the form of a transparent elastically deformable first membrane 10 is connected to an inner edge 502d of the annular plate member 502 defining an aperture O of the plate member 502, which first optical element 10 in turn is connected to a body 20 that is connected to a second optical element 30 being connected to the bottom 602 of the first return structure 600. The second optical element 30 can be transparent and rigid or may be formed as a transparent and elastically deformable second membrane 30 (see also above). The first and second optical element 10, 30 and said body 20 can be connected to each other as described with respect to Fig. 1. The body 20 being surrounded by the first coil 400 and the first return structure 600 can be configured as described with respect to Fig. 1, too.

Further, axial movement of the plate member 502 by means of the reluctance actuator 40 can be performed as described with respect to Figs. 10 to 12.

Furthermore, the plate member 502 can be arranged between a first and a second spring member 60, 61 as described with respect to Figs. 24 to 26.

In addition, the optical device 1 according to Fig. 27 may comprise an air exchange hole O' in the first return structure 600 for the reasons already described above.

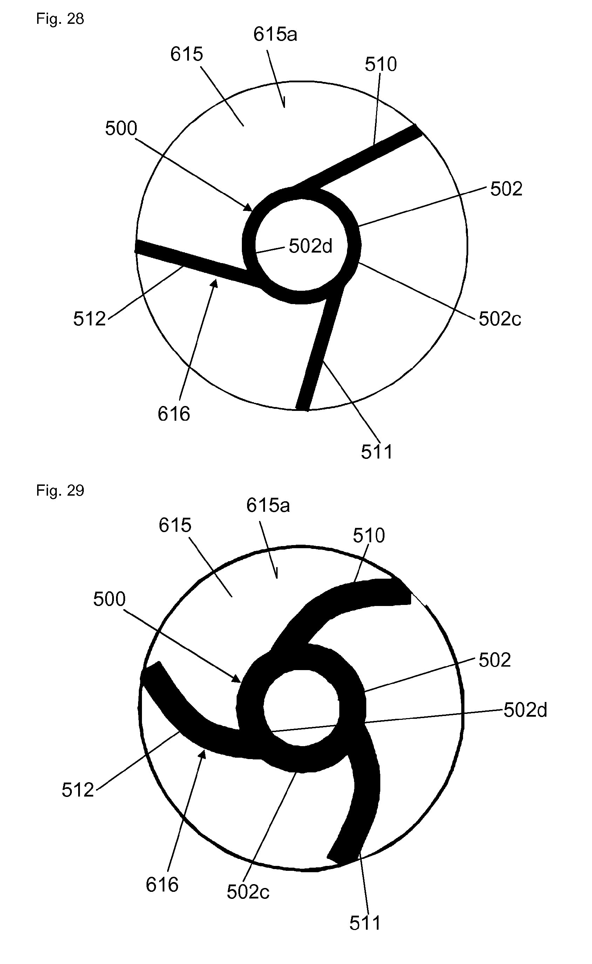

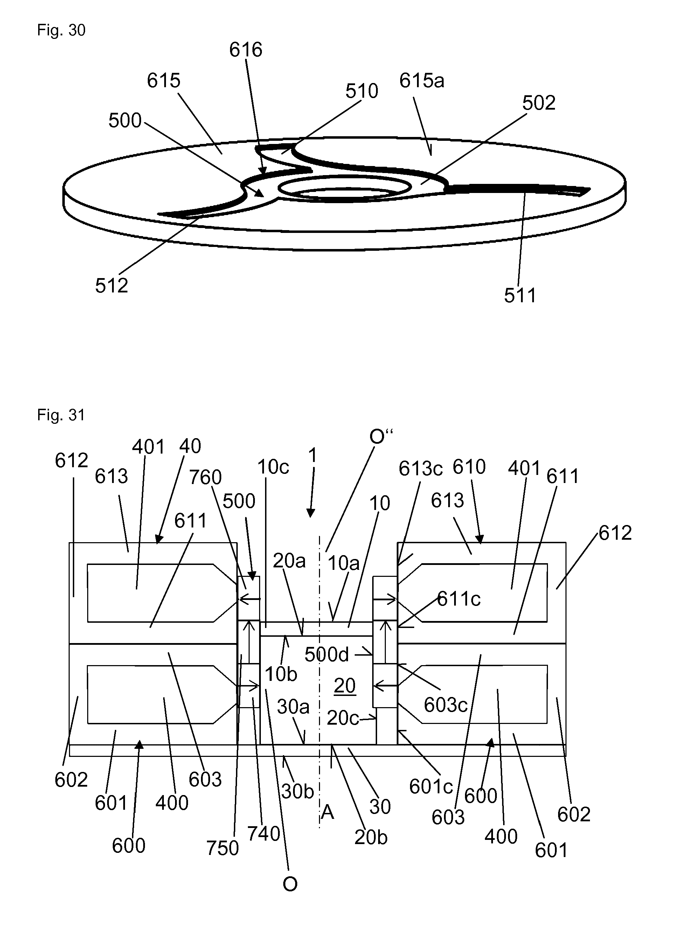

Instead of or in addition to such spring members 60, 61, a magnetic flux guiding structure 500 and central magnetic flux return structure 615 (which may be formed out of the same material as the other return structures 600, 610) as shown in Figs. 28 to 30 may be used with the embodiment of Fig. 27, wherein the magnetic flux guiding structure 500 comprises an annular plate member 502 having an outer edge 502c from which a plurality of spring members 510, 511, 512 protrude (particularly three such spring members 510, 511, 512), wherein these spring members 510, 511, 512 are preferably integrally formed with the plate member 502 and extend in the extension plane spanned by the annular plate member 502. The associated annular central magnetic flux return structure 615 surrounds the plate member 502 in said extension plane, wherein the plate member 502 is thinner than the central return structure 615 in a direction perpendicular to said extension plane, i.e., along the axial direction A. The central return structure 615 preferably comprises a recess 616 (cf. Fig. 30) in its first surface 615a that receives said spring members 510, 511, 512, particularly in a form-fitting manner. The spring members 510, 511, 512 provide a restoring force upon axial movement of the plate member 502 by means of the reluctance actuator 40, which movement deforms body 20 and alters the curvature of the first optical element 10 (and eventually of the second optical element 20) as described above. The restoring force is designed to return the plate member 502 into its initial position and also to prevent said pull-in effect of the reluctance actuator means 40 described in detail above.

The spring members 510, 511, 512 may have a linear shape as shown in Fig. 28 and may protrude tangentially from the plate member 502 as shown in Fig. 28, but may also have a curved shape as shown in Fig. 29.

Fig. 31 shows a further embodiment of the present invention comprising a reluctance actuator means 40 having a first and a second magnetic flux return structure 600, 610 that rest against each other. The actuator means 40 further comprises a first coil 400 configured as described with respect to Figs. 10 to 12 that is embedded in the first return structure 600, as well as a second coil 401 configured in the same way that is embedded in the second return structure 610. Each return structure 600, 610 further comprises a circumferential first wall 601, 611, wherein each first wall 601, 611 is connected to a second wall 603, 613 of the respective magnetic flux return structure 600, 610 via a bottom 602, 612 of the respective magnetic flux return structure 600, 610. The respective coil 400, 401 is further arranged between the respective first and second wall 601, 603, 611, 613, which extend perpendicular to the axial direction A so that the return structures 600, 610 thereby enclose the respective coil 400, 401 in a U-shaped manner. Here, said bottoms 602, 612 are formed cylindrical and surround the associated coil 400, 401 while the first wall 611 of the second return structure 610 rests on the second wall 603 of the first return structure 600 in a congruent manner.

In this way, the return structures 600, 610 define a central cylindrical recess O" in which a cylindrical magnetic flux guiding structure 500 slides along the circumferential face sides 601 c, 603c, 611 c, 613c of the first and second walls 601, 603, 611, 613, which face sides engage behind the respective coil 400, 401, respectively. Further, the cylindrical magnetic flux guiding structure 500 also slides along the respective coil 400, 401 being preferably flush with the associated face sides 601 c, 603c, 611 c, 613c. The cylinder axis of the magnetic flux guiding structure 500 coincides with said axial direction A, i.e., the magnetic flux guiding structure 500 slides along the axial direction A when actuated by the reluctance actuator means.

Further, a first optical element 10 in the form of a transparent elastically deformable first membrane 10 is connected to an inner side 500d of the cylindrical magnetic flux guiding structure 500 defining an aperture O of the magnetic flux guiding structure 500, which first optical element 10 in turn is connected to a body 20 that is connected to a second optical element 30 being connected to the first wall 601 of the first return structure 600. The second optical element 30 can be transparent and rigid or may be formed as a transparent and elastically deformable second membrane 30 (see also above). The first and second optical element 10, 30 and said body 20 can be connected to each other as described with respect to Fig. 1. The body 20 can be configured as described with respect to Fig. 1, too.

Further, as shown in Fig. 31 the magnetic flux guiding structure 500 comprises three annular magnets 740, 750, 760 wherein the lower one adjacent to the first coil 400 comprises a magnetization pointing towards body 20 being surrounded by the lower magnet 740 and the first return structure 600. The central magnet 750 being arranged between the lower magnet 740 and an upper magnet 760 comprises a magnetization pointing along the axial direction A, namely away from the second optical element 30, while the upper magnet 760 comprises a magnetization pointing towards the second return structure 610. Particularly, the first optical element 10 is connected to said inner side 500d in the region of the central magnet 750.

Now, in order to move the magnetic flux guiding structure 500 axially along direction A, the reluctance actuator means 40 is designed to apply a current to the first coil 400 such that the magnetic flux generated by the first coil 400 and guided by the first return structure 600 and the magnetic flux guiding structure 500 flows in the same direction as the magnetic flux generated by the magnets 740, 750, 760 of the magnetic flux guiding structure 500 thus pulling the magnetic flux guiding structure 500 downwards toward the second optical element 20 due to a resulting reluctance force. Likewise, when a current is applied to the second coil 401 so that the magnetic flux generated by the second coil 401 and guided by the second return structure 610 and the magnetic flux guiding structure 500 flows in the same direction as the magnetization of the magnets 740, 750, 760 of the magnetic flux guiding structure 500 thus pulling the magnetic flux guiding structure 500 upwards away from the second optical element 30 due to a resulting reluctance force. The downward and upward movement of the magnetic flux guiding structure 500 results in a corresponding deformation of body 20 and an increased or decreased curvature of the first optical element 10 and eventually also of the second optical element 30.

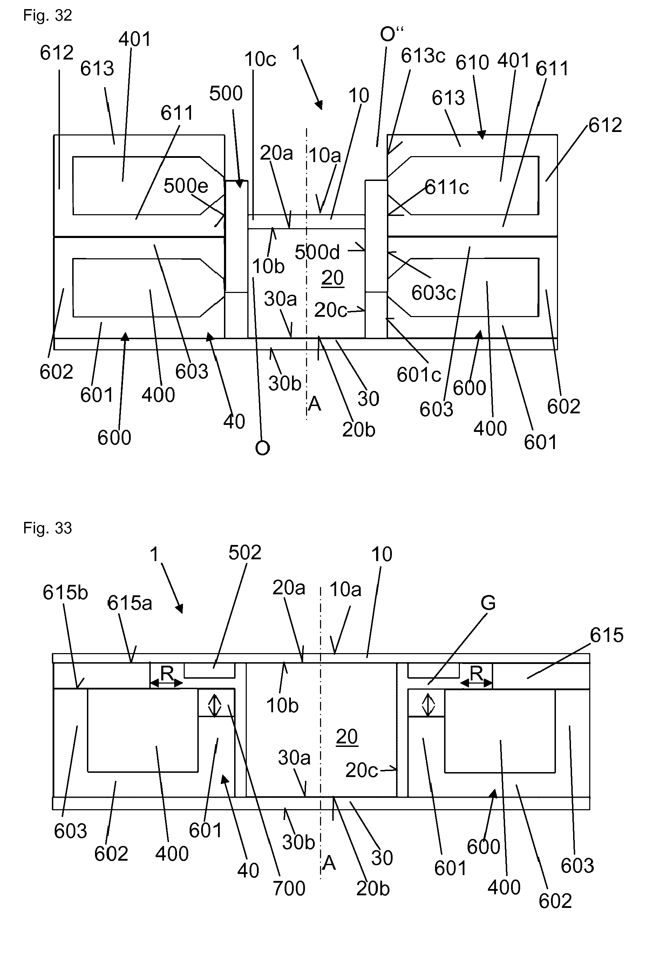

Fig. 32 shows a modification of the embodiment shown in Fig. 31, wherein the cylindrical magnetic flux guiding structure 500 does here not comprise a permanent magnetization, but an outer surface 500e facing towards the return structures 600, 610, via which outer surface 500e the magnetic flux guiding structure 500 slides along the first and the second return structure 600, 610 upon axial movement of the magnetic flux guiding structure 500.

Fig. 33 shows a modification of the embodiment shown in Fig. 13, where the plate member 500 of Fig.13 and the spring member 60 is now replaced by a top magnetic flux return structure 615 that is designed like the central magnetic flux return structure 615 described with respect to Figs. 28 to 30 and by a magnetic flux guiding structure 500 having a plate member 502 and spring members 510, 511, 512 as described with respect to Figs. 28 to 30. Further, in contrast to Fig. 13 the first wall 601 is not entirely replaced by a magnet 700, but comprises a first wall 601 that is shorter than the second wall 603 along the axial direction A, wherein an annular magnet 700 rests on a face side of the first wall 601 such that said magnet 700 is flush with the first coil 400 and the face side of the second wall 603. Here, the magnetic flux guiding structure 500 is arranged with its annular plate member 502 above the magnet 700, wherein the spring members 510, 511, 512 are arranged in the recess 616 of the top magnetic flux return structure 615, i.e. between the latter and the first optical element 10. Also here, a radial gap R is preferably present between the plate member 502 and the surrounding top magnetic flux return structure 615, which is preferably larger than the first gap G to prevent a lateral movement of the plate member that may cause the afore-described pull-in effect.

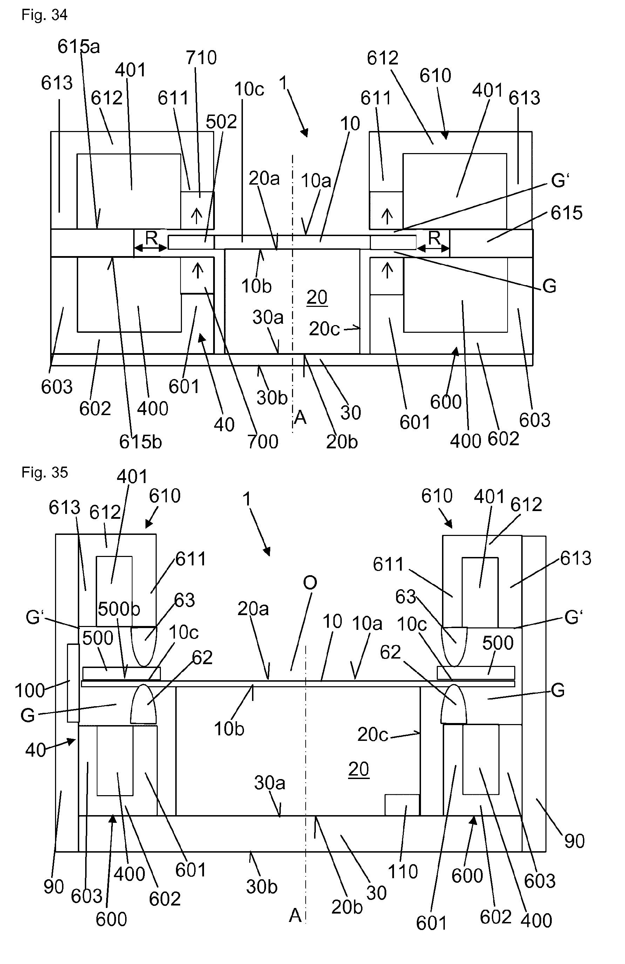

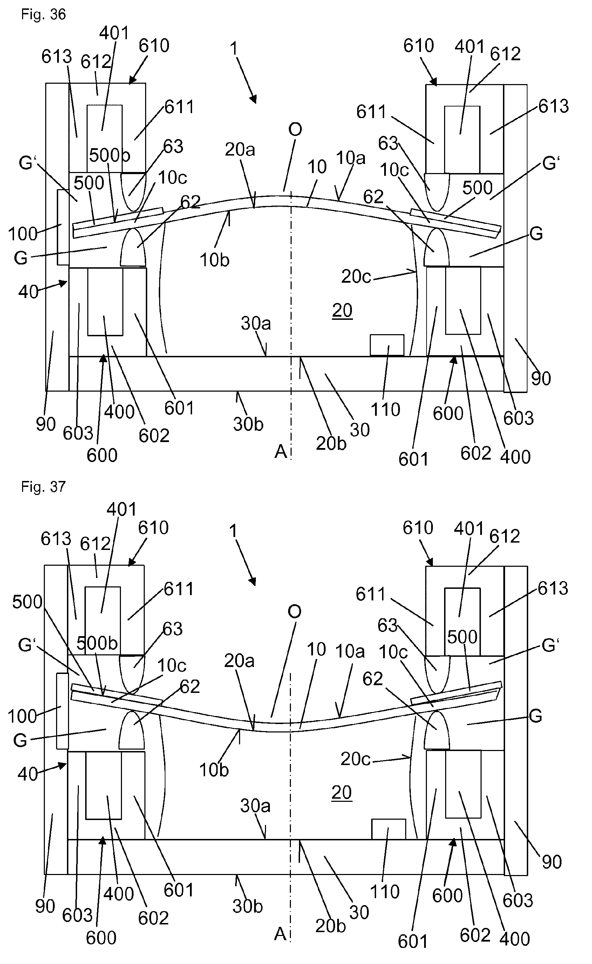

Furthermore, Fig. 34 shows a modification of the embodiment shown in Fig. 33, wherein now two return structures 600, 610 of the kind shown in Fig. 33 are present. The second return structure 610 is formed as the first one 600 described in Fig. 33, wherein the magnets 700, 710 are arranged on either side of the plate member 502 and separated from the plate member 502 by a first and a second gap G, G'. Further, the two coils, namely first coil 400 and second coil 401, face each other, while the bottoms 602, 612 are each arranged on a side of the respective coil 400, 401, which sides face away from each other. The two return structures are coupled via a central magnetic flux return structure 615 as described in Fig. 28 to 30 that is arranged between the two return structures 600, 610. Due to the presence of two coils 400, 401 and corresponding return structures 600, 610 an actuation of the plate member 502 in an active bidirectional manner is possible. Further, Figs. 35 to 37 show an embodiment of the present invention which is a modification of the embodiment shown in Figs. 24 to 26, wherein the spring members 60, 61 are now replaced by first and second (e.g. annular) rigid contact regions 62, 63 between which the plate member 502 is held. Here, the plate member 502 as a whole is not translated in the axial direction A by the reluctance actuator means 40, but deformed when a reluctance force pulls the plate member 502 e.g. downwards towards the first return structure 600 to reduce the first gap G, wherein the first rigid contact region 62 acts as a pivot point/region as shown in Fig. 36. Due to this deformation a certain (adjustable) curvature of the first optical element 10 results, here a convex curvature. The situation where the reluctance actuator means 40 deforms the plate member 502 towards the upper second return structure 610 so as to decrease the second gap G' while giving the first optical element 10 a concave curvature is shown in Fig. 37. Further, since the plate member 500 is now held by the contact regions 62, 63 the latter may also be designed to prevent a lateral movement of the plate member 502 perpendicular to the axial direction A and are thus able to prevent a lateral pull-in effect of the reluctance actuator means 40.

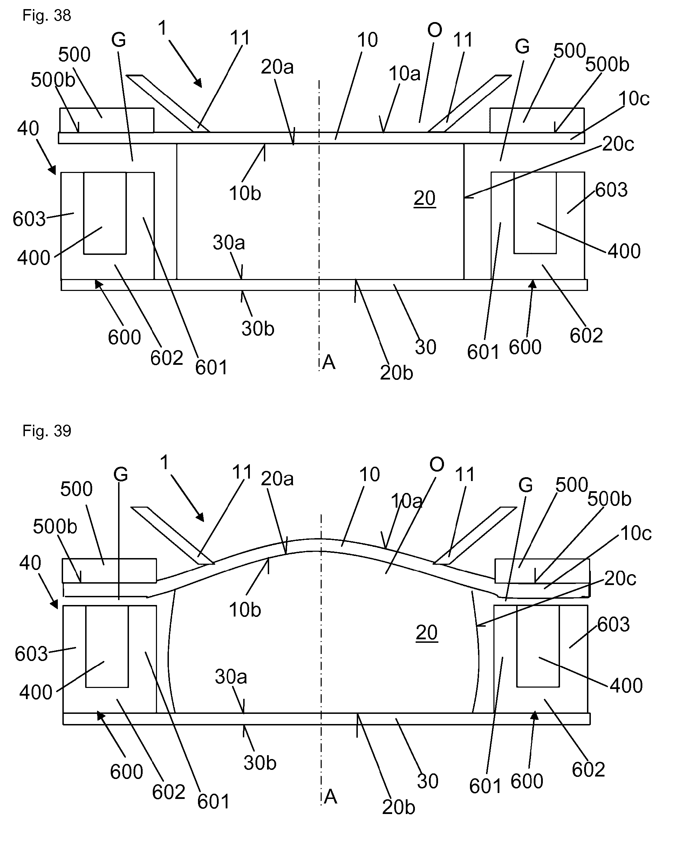

Figs. 38 to 39 show schematical cross sectional views of a modification of the embodiment shown in Fig. 1, where the optical device 1 now comprises an additional lens shaper that defines a contact region 11 that is adapted to contact the second (e.g. outer) surface 10a of the first optical element 10, which is here formed as an e.g. transparent elastically deformable membrane 10. When the first membrane 10 is now deformed such that the first membrane 10 presses against the lens shaper 11 the form of said contact region 11 determines the shape of the deformed first membrane 10, namely the shape of a central region of the first membrane 10 that is delimited by said contact region 11. For instance, in case said contact region 11 has a circular form, the curvature of the first membrane 10 will be spherical. In case the contact region 11 consists of two parallel linear regions, a cylindrical curvature of the first membrane 10 may result. Any other lens shaper/contact region shape is possible.

## Claims

1. Optical device, comprising:
- a first optical element (10) having a first surface (10b),
- a second optical element (30) having a first surface (30a), wherein the two first surfaces (10b, 30a) face each other, and
- an elastically deformable body (20) arranged between the two optical elements (10, 30), wherein said body (20) comprises a first surface (20a) and a second surface (20b) facing away from the first surface (20a) of said body (20), wherein the first surface (20a) of said body (20) is connected to the first surface (10b) of the first optical element (10), and wherein the second surface (20b) of said body (20) is connected to the first surface (30a) of the second optical element (30), and wherein
- the optical device (1) comprises a reluctance actuator means (40) that is designed to move the first optical element (10) so as to elastically deform said body (20), wherein said reluctance actuator means (40) comprises a first electrically conducting coil (400), a first magnetic flux return structure (600) being arranged adjacent to said coil (400), and a magnetic flux guiding structure (500) attached to the first optical element (10), wherein said magnetic flux guiding structure (500) is particularly separated from said first magnetic flux return structure (600) by a first gap (G), and wherein the optical device (1) is designed to apply a current to said first coil (400) such that magnetic flux generated by the first coil (400) is guided by the first magnetic flux return structure and the magnetic flux guiding structure (500) particularly via said first gap (G) and a resulting reluctance force moves the magnetic flux guiding structure (500) and therewith the first optical element (10) with respect to the first magnetic flux return structure (600).

2. Optical device according to claim 1, **characterized in that** said reluctance actuator (40) is designed to move said magnetic flux guiding structure (500) in an axial direction (A) with respect to the first magnetic flux return structure (600) so as to deform said body (20) and thereby adjust a curvature of said first optical element (10), and particularly also a curvature of said second optical element (30), wherein said axial direction (A) is aligned with an optical axis (A) of the optical device (1) or oriented perpendicular to the second optical element (30).

3. Optical device according to one of the preceding claims, **characterized in that** the magnetic flux guiding structure (500) comprises a plate member (500, 502), wherein particularly said plate member (500, 502) comprises or is formed out a magnetically soft material such as iron, and particularly has an aperture (O).

4. Optical device according to one of the preceding claims, **characterized in that** the optical device (1) comprises a guiding means (50) for guiding said movement of the magnetic flux guiding structure (500) along said axial direction (A), wherein particularly said guiding means (50) comprises at least one pin (51) connected to the first optical element (10) or to the magnetic flux guiding structure (500), which at least one pin (51) is designed to slide in an associated recess of the optical device (1), which recess is particularly formed in a housing part (52) of the optical device (1), which housing part (52) is particularly connected to first the magnetic flux return structure (600), or wherein particularly said guiding means (50) is formed by a protrusion (501) of the magnetic flux guiding structure (500), particularly by a circumferential protrusion (501), which protrusion (501) is configured to slide along a lateral surface (600a, 600b) of the first magnetic flux return structure (600).

5. Optical device according to one of the preceding claims **characterized in that** the optical device (1) comprises at least one spring member (60, 61, 80) that is designed to be elastically deformed when the magnetic flux guiding structure (500) is moved with respect to the first magnetic flux return structure (600) by the reluctance actuator means (40), so that said spring member (60, 61) provides a restoring force that helps moving the magnetic flux guiding structure (500) back into an initial position, particularly when said current is switched off, and that particularly prevents a pull-in of the reluctance actuator means (40), particularly by preventing the magnetic flux guiding structure (500) from snapping to the first magnetic return structure (600) the second magnetic return structure (610), and/or to a return structure (615) being arranged laterally with respect to the magnetic flux guiding structure (500).

6. Optical device according to claim 5, **characterized in that** the magnetic flux guiding structure (500) is coupled to the first magnetic flux return structure (600) via said spring member (60), wherein the optical device (1) comprises a magnet (700) adjacent said first coil (400), which magnet (700) is designed to exert a force onto the magnetic flux guiding structure (500) that tends to move the latter towards the first magnetic flux return structure (600) so as to pre-tension said spring member (60).

7. Optical device according to one of the preceding claims, **characterized in that** said reluctance actuator means (40) comprises a second electrically conducting coil (401), and a second magnetic flux return structure (610) being arranged adjacent to said second coil (401), wherein said magnetic flux guiding structure (500) is particularly separated from said second magnetic flux return structure (610) by a second gap (G'), and wherein the optical device (1) is designed to apply a current to said second coil (401) such that magnetic flux generated by the second coil (401) is guided by the second magnetic flux return structure (610) and the magnetic flux guiding structure (500) particularly via said second gap (G') and a resulting reluctance force moves the magnetic flux guiding structure (500) and therewith the first optical element (10) with respect to the second magnetic flux return structure (610), wherein particularly said second magnetic flux return structure (610) faces said first magnetic flux return structure (600), and wherein particularly said magnetic flux guiding structure (500) is arranged between the first and the second magnetic flux return structure (600, 610), or wherein particularly said magnetic flux guiding structure (500) is surrounded by the first and/or the second magnetic flux return structure (600, 610).

8. Optical device according to one of the preceding claims, **characterized in that** said reluctance actuator means (40) is designed to tilt the magnetic flux guiding structure (500) and therewith the first optical element (10) with respect to the magnetic flux return structure (600), particularly so as to form said body (20) into a prism, particularly for deflecting light passing through the body (20), wherein particularly the reluctance actuator means (40) is designed to move the first optical element (10) axially and/or to tilt it..

9. Optical device according to one of the preceding clams, **characterized in that** the reluctance actuator means (40) comprises a plurality of electrically conducting first coils (400, 400') arranged adjacent said first magnetic flux return structure (600), particularly, two, three, four or more coils (400, 400'), which first coils are arranged along a periphery of said body (20) such that they face the magnetic flux guiding structure (500), respectively, wherein particularly each first coil (400, 400') is equally spaced from its neighboring first coils (400, 400') along said periphery.

10. Optical device according claims 7 and 9, **characterized in that** the reluctance actuator means (40) comprises a plurality of electrically conducting second coils (401, 401') arranged adjacent said second magnetic flux return structure (610), which second coils (401, 401') are arranged along a said magnetic flux guiding structure (500) such that they face the magnetic flux guiding structure (500), respectively, wherein particularly each second coil (401, 401') is equally spaced from its neighboring second coils (41) along said magnetic flux guiding structure, and wherein particularly each second coil (401, 401') faces an associated first coil (400, 400').

11. Optical device according to claim 3 or according to one of the claims 5 to 10 when referring to claim 3, **characterized in that** said plate member (500) is designed to be deformable, wherein particularly for deforming said plate member (500) the latter comprises a plurality of first recesses (520), wherein particularly each first recess (520) extends in a radial direction of the plate member (500), and/or a plurality of second recesses (530), wherein particularly each second recess (530) extends in a radial direction of the plate member (500), wherein particularly each first recess (520) starts at an outer edge (500c) of the plate member (500) and ends spaced apart from an inner edge (500d) of the plate member (500), and wherein particularly each second recess (530) starts at an inner edge (500d) of the plate member (500) and ends spaced apart from an outer edge (500c) of the plate member (500), and wherein particularly the first coils (400, 400') are arranged such that they each face an associated second recess (530) and/or are arranged along the plate member (500) between two neighboring first recesses (520).

12. Optical device according to one of the preceding claims, **characterized in that** the optical device (1) comprises a temperature sensor (110) that is designed to measure the temperature of the body (20) of the optical device (1), wherein said temperature sensor (110) cooperates with a control unit (111) of the optical device (1) that is designed to control said axial movement of the magnetic flux guiding structure (500) depending on the measured temperature, so as to compensate for a temperature-induced change of a focal length of the optical component formed by the body (20) and the optical elements (10, 30).

13. Optical device according to one of the preceding claims, **characterized in that** the first optical element (10) is connected to the magnetic flux guiding structure (500) via a flexible layer (15), particularly for protecting the first optical element (10) from the magnetic flux guiding structure (500) and/or for influencing the shape of the first optical element (10), particularly for providing a smooth transition between an edge region (10c) of the first optical element (10) and an adjacent curved region of the first optical element (10) when the first optical element (10) is deformed by means of the reluctance actuator means (40) so as to exhibit a non-vanishing curvature.

14. Optical device according to one of the preceding claims, **characterized in that** the body (20) is tapered, particularly towards the second optical element (30).

15. Optical device according to one of the preceding claims, **characterized in that** the optical device (1) comprises an air exchange hole (O') connecting an interior space of the optical device (1) to the ambient atmosphere, wherein said body (20) is arranged in said interior space.
